(19) Europäisches Patentamt
European Patent Office
Office européen des brevets

(11) **EP 4 461 501 B1**

(12) **EUROPEAN PATENT SPECIFICATION**

(45) Date of publication and mention
of the grant of the patent:
**03.06.2026 Bulletin 2026/23**

(21) Application number: **23770667.6**

(22) Date of filing: **10.03.2023**

(51) International Patent Classification (IPC):
**B29C 44/44** *(2006.01)*     **B29C 44/00** *(2006.01)*
**C08J 9/22** *(2006.01)*       **B29C 44/34** *(2006.01)*

(52) Cooperative Patent Classification (CPC):
**C08J 9/232; B29C 44/445; B29C 44/585;**
**C08J 9/122;** B29C 44/3426; B29K 2995/0063;
B29K 2995/0094; C08J 9/18; C08J 2201/03;
C08J 2203/06; C08J 2323/16; C08J 2377/00;
C08J 2423/16

(86) International application number:
**PCT/JP2023/009245**

(87) International publication number:
**WO 2023/176712 (21.09.2023 Gazette 2023/38)**

(54) **METHOD FOR PRODUCING THERMOPLASTIC RESIN FOAM PARTICLE MOLDED BODY**

VERFAHREN ZUR HERSTELLUNG EINES FORMKÖRPERS AUS THERMOPLASTISCHEN HARZSCHAUMPARTIKELN

PROCÉDÉ DE PRODUCTION D'UN CORPS MOULÉ EN PARTICULES DE MOUSSE DE RÉSINE THERMOPLASTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.03.2022 JP 2022043018**

(43) Date of publication of application:
**13.11.2024 Bulletin 2024/46**

(73) Proprietor: **JSP Corporation**
**Tokyo 100-0005 (JP)**

(72) Inventors:
• **MIURA, Tomohiro**
  **Kanuma-shi, Tochigi 322-0014 (JP)**
• **SASAKI, Kenta**
  **Kanuma-shi, Tochigi 322-0014 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
EP-A1- 4 321 565        EP-A1- 4 406 997
JP-A- 2002 248 645      JP-A- 2002 248 645
JP-A- 2012 102 201      JP-A- 2020 026 082
US-A1- 2021 300 005

**Description**

TECHNICAL FIELD

The present invention relates to a method for producing a molded article of thermoplastic resin expanded beads.

BACKGROUND ART

Molded articles of polypropylene-based resin expanded beads are lightweight and excellent in cushioning property, rigidity, and the like and therefore are used for various applications such as packaging materials, containers, and cushioning materials. In recent years, the use of molded articles of polypropylene-based resin expanded beads has been increasingly expanded, and accordingly, it is required to mold polypropylene-based resin expanded beads into various shapes.

The molded article of polypropylene-based resin expanded beads is produced, for example, by a method called an in-mold molding method in which polypropylene-based resin expanded beads are filled in a mold, and then steam is supplied into the mold to heat the beads. In the in-mold molding method, when steam is supplied into the mold, the expanded beads are secondarily expanded, and the surfaces thereof are melted. As a result, the expanded beads in the mold are mutually fusion-bonded, and a molded article having a shape corresponding to the shape of the cavity of the mold can be obtained. Since the molded article immediately after molding tends to swell due to secondary expansion, the molded article is cooled with water, air, or the like in the mold and then released from the mold. Since the molded article released from the mold contains moisture derived from steam, the molded article is sufficiently dried and then used for various applications.

In the in-mold molding method, if the filling of the expanded beads into the mold is insufficient, the appearance of the resulting molded article is likely to deteriorate. Therefore, as a method for filling the polypropylene-based resin expanded beads in the mold as densely as possible, there is a method called cracking filling (see, for example, WO 2020/189389 A). In the cracking filling, the cavity is filled with expanded beads in a state where the mold is not completely clamped and the movable mold is slightly retracted from the fixed mold in the mold opening direction, then the mold is clamped to thereby mechanically compress the expanded beads in the cavity. Cracking filling is a method commonly employed in the in-mold molding method because it does not require any special equipment. US2021/300005 A1 discloses a method for producing a molded article of thermoplastic resin expanded beads comprising a cracking filling step and an in-mold molding step of supplying steam into the molding cavity.

EP 4 321 565 A1, which has been published after the filing date of the present application, discloses a core member used for a laminate including the core member and polyurethane foam laminated on the core member. EP 4 406 997 A1, which also has been published after the filing date of the present application, discloses a method for manufacturing a polypropylene-based resin foamed particle molded article.

SUMMARY OF INVENTION

PROBLEMS TO BE SOLVED BY INVENTION

The polypropylene-based resin expanded beads described in WO 2020/189389 A have a problem that it takes a significantly long time to cool the molded article in the mold when the filling rate of the expanded beads is increased. In addition, when the filling rate of the expanded beads is increased, there is a problem that the fusion bondability between the expanded beads is easily deteriorated.

In addition, with the recent increase in environmental awareness, it is desired to reduce energy consumption in the production process of molded articles. From such a viewpoint as well, it has been desired to further shorten the cooling time in the mold and the drying time after demolding and to improve the productivity of the molded article excellent in surface properties and fusion bondability.

The present invention has been made in view of such a background, and an object thereof is to provide a method for producing a molded article of thermoplastic resin expanded beads capable of molding a molded article having excellent productivity, excellent surface property and fusion bondability.

MEANS FOR SOLVING PROBLEM

One aspect of the present invention is a method for producing a molded article of thermoplastic resin expanded beads according to claim 1. Further developments are given in the dependent claims.

EFFECTS OF INVENTION

With the above aspects, a method for producing a molded article of thermoplastic resin expanded beads capable of molding a molded article having excellent productivity and excellent surface properties and fusion bondability can be provided.

BRIEF DESCRIPTION OF DRAWINGS

Fig. 1 is a sectional view of a mold in a state of being filled with expanded beads in a cracking filling step.
Fig. 2 is a schematic view of an appearance of an expanded bead having a through hole as a defective portion.
Fig. 3 is a cross-sectional view taken along the line III-III in the direction of arrows of Fig. 2 (plan view of a cut surface of the expanded bead).
Fig. 4 is a schematic view of an appearance of an expanded bead having grooves as defective portions.
Fig. 5 is a cross-sectional view taken along the line V-V in the direction of arrows of Fig. 4 (plan view of a cut surface of the expanded bead).
Fig. 6 is a schematic view of an appearance of an expanded bead including a fusion-bondability improving layer.
Fig. 7 is a cross-sectional view taken along the line VII-VII in the direction of arrows of Fig. 6 (plan view of a cut surface of the expanded bead).
Fig. 8 is an explanatory diagram illustrating a method for calculating an area of a high-temperature peak.

MODE FOR CARRYING OUT INVENTION

(Method for Producing Molded Article of Thermoplastic Resin Expanded Beads)

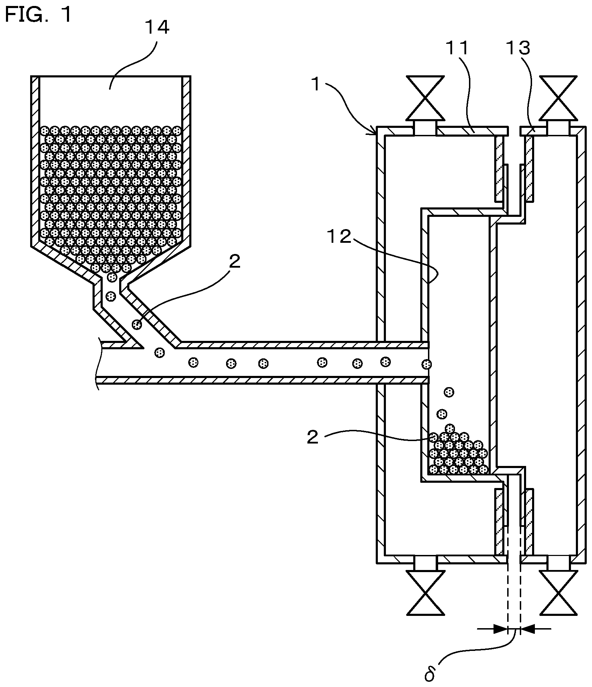

In producing a molded article of thermoplastic resin expanded beads (hereinafter referred to as "molded article of expanded beads" or "molded article"), first, thermoplastic resin expanded beads (hereinafter referred to as "expanded beads") including a foamed layer are filled in a molding cavity of a mold with a cracking gap, and then a cracking filling step of completely closing the mold is performed. For example, as shown in Fig. 1, a mold 1 used for producing the molded article includes a fixed mold 11 and a movable mold 13 configured to be able to form a molding cavity 12 between the fixed mold 11 and the movable mold 13, and the movable mold 13 is configured to be able to move reciprocally in one direction with respect to the fixed mold 11. Hereinafter, the moving direction of the movable mold may be referred to as an "opening/closing direction". The molding cavity provided in the mold has a shape corresponding to a desired shape of the molded article.

Each expanded bead to be filled in the mold has a columnar shape and has at least one of one or two kinds of defective portions selected from the group consisting of a through hole penetrating the inside of the expanded bead in an axial direction thereof and a groove extending on a side peripheral surface of the expanded bead in the axial direction. In a cut surface obtained by cutting the expanded bead at a center in the axial direction along a plane perpendicular to the axial direction, a ratio Ca/A of an average cross-sectional area Ca per one defective portion to an average cross-sectional area A of the expanded bead is 0.01 or more and 0.20 or less, and a ratio Ct/A of a total cross-sectional area Ct of the defective portion(s) to the average cross-sectional area A of the expanded bead is 0.02 or more and 0.20 or less. The detailed configuration of the expanded bead will be described later.

In the cracking filling step, for example, the expanded beads are filled into the mold as follows. First, as illustrated in Fig. 1, the movable mold 13 is disposed at a position apart from the fixed mold 11 in the opening/closing direction such that the molding cavity 12 is formed, whereby a cracking gap is formed between the movable mold 13 and the fixed mold 11. At this time, the cracking gap is formed so that expanded beads 2 do not leak out of the molding cavity 12. Then, the molding cavity 12 is filled with the expanded beads 2 in the state where the mold 1 is not completely closed. In the state where the filling of the molding cavity 12 with the expanded beads 2 is completed, the expanded beads 2 are not compressed by the mold 1 and maintain a shape in a natural state.

After the filling of the molding cavity 12 with the expanded beads 2 is completed, the movable mold 13 is moved toward the fixed mold 11, and the mold 1 is closed. When the mold 1 is completely closed, the expanded beads 2 in the molding cavity 12 are mechanically compressed in the opening/closing direction by the movable mold 13. In the production method, the expanded beads are filled so that a filling rate F of the expanded beads represented by Formula (1) below is 125% or more and 220% or less in a state where the mold is completely closed.

$$F = \{a/(b \times c)\} \times 100 \qquad \cdots \quad (1)$$

In Formula (1) above, a represents the mass (unit: kg) of the expanded beads filled in the mold, b represents the bulk density (unit: $kg/m^3$) of the expanded beads, and c represents the capacity (unit: $m^3$) of the molding cavity.

After the cracking filling step is performed as described above, an in-mold molding step of supplying steam into the molding cavity to fusion-bond the expanded beads mutually is performed. In the in-mold molding step, the expanded beads in the mold are heated by steam and are fusion-bonded to each other while being secondarily expanded. Thereby, the expanded beads in the mold can be integrated to form a molded article.

After the heating of the expanded beads is completed, the molded article in the mold is cooled with water or the like to stabilize the shape. Thereafter, the molded article is taken out from the mold, whereby the in-mold molding is completed.

In the production method, the expanded beads each having the specific shape are filled in the molding cavity so that the filling rate F falls within the specific range. As described above, by performing in-mold molding using steam after performing cracking filling with setting the filling rate F to a relatively high range, the drying time of the molded article after demolding can be easily shortened, and the productivity of the molded article can be significantly improved. In the production method, since the expanded beads each have the specific shape, the cooling time of the molded article in the mold can be shortened, and the surface property and fusion bondability of the molded article can be improved even when the molded article is relatively thick or even when the molded article has a complicated shape e.g., a shape the thickness of which is partly different. Furthermore, in the production method, even when the aging step is not performed on the molded article released from the mold, significant shrinkage and deformation of the molded article are easily avoided. As a reason why such operation and effect are obtained, for example, the following reason is conceivable.

As described above, the expanded beads each have one or more kinds of defective portions selected from the group consisting of a groove and a through hole. When cracking filling is performed in the above-described manner using such expanded beads, it is considered that defective portions of the expanded beads such as through holes and grooves, voids between the expanded beads, and the like are complicatedly connected in a state where the mold is completely closed, so that fine passages through which steam can pass are formed in the molding cavity. Therefore, it is considered that when steam is supplied into the mold, the steam easily reaches the inside of the mold through the fine passages, and the entire expanded beads in the mold can be easily heated. In addition, it is considered that the expanded beads each having the defective portion(s) have moderate secondary expandability and thus appropriately expand when heated by steam. As a result, it is considered that by using the expanded beads, a molded article having excellent fusion bondability and a good appearance can be obtained even under conditions where the molding temperature during in-mold molding is low.

In addition, since the expanded beads having the defective portion(s) have appropriate secondary expandability, secondary expansion can be sufficiently performed in the mold even in the case of not applying the internal pressure in advance or in the case of applying the internal pressure of relatively low level. Furthermore, since the expanded beads each have the above-described defective portion(s), it is considered that excessive expansion of the molded article at the completion of the heating with steam can be avoided. This makes it possible to shorten the time required from the completion of heating of the expanded beads until the shape of the molded article is stabilized in the mold. As a result, it is considered that the time required for cooling the molded article in the mold can be shortened. In addition, even when the filling rate F is relatively high within the above range, the fusion bondability of the molded article can be enhanced, and the cooling time during in-mold molding can be shortened.

Furthermore, an appropriate open cell structure is formed in the molded article after completion of in-mold molding. The open cell structure is a minute space portion communicating with the outside of the molded article. The open cell structure is formed by complicatedly connecting voids formed by voids between the expanded beads communicating with each other, open cell portions and defective portions of the expanded beads constituting the molded article, and the like. According to the production method, it is considered that since formation of a coarse open cell structure inside the molded article can be curtailed, the time required for drying the molded article after demolding can be shortened.

In addition, when the molded article having the open cell structure is taken out from the mold, air quickly flows into the cells in the molded article through the open cell structure, and as a result, the internal pressure of the molded article is considered to be stabilized early. Therefore, according to the production method, it is considered that significant shrinkage and deformation of the molded article are easily curtailed even when the aging step is not performed.

In the case where the cracking filling and in-mold molding are performed using expanded beads each having no defective portion, failure of fusion-bonding between the expanded beads and an increase in cooling time of the molded article in the mold may be caused, and productivity may be significantly deteriorated. In particular, when the thickness of the molded article to be obtained is large, or when the filling rate F at the cracking filling is high, these problems are likely to occur.

In addition, even in the case where defective portions are provided, when the ratio Ca/A of the average cross-sectional area Ca per defective portion to the average cross-sectional area A of the expanded bead and/or the ratio Ct/A of the total cross-sectional area Ct of the defective portion(s) to the average cross-sectional area A of the expanded bead is excessively small, it is difficult to obtain the effect of the defective portions. Therefore, there is a possibility that failure of fusion-bonding between the expanded beads is caused. In this case, the cooling time of the molded article in the mold becomes excessively long, and the productivity may be lowered. When the aging step is not performed, the molded article may be significantly shrunk or deformed.

By using the expanded beads having a ratio Ca/A of 0.01 or more and a ratio Ct/A of 0.02 or more, the cooling time of the molded article in the mold can be shortened. From the viewpoint of further enhancing such operation and effect, the ratio Ca/A is preferably 0.02 or more. From the same viewpoint, the ratio Ct/A is more preferably 0.03 or more.

On the other hand, when the ratio Ca/A of the average cross-sectional area Ca per defective portion to the average cross-sectional area A of the expanded bead and/or the ratio Ct/A of the total cross-sectional area Ct of the defective portion(s) to the average cross-sectional area A of the expanded bead is excessively large, secondary expandability of the expanded beads may be deteriorated. As a result, relatively large voids are likely to be formed in the obtained molded article, which may lead to an increase in water content and an increase in drying time. In addition, when the filling rate F at the cracking filling is low, in addition to these problems, there is a possibility that the surface property (appearance) of the molded article is deteriorated or the rigidity is decreased.

By using the expanded beads with a ratio Ca/A of 0.20 or less and a ratio Ct/A of 0.20 or less, the drying time of the molded article after demolding can be shortened, and a molded article excellent in surface property and rigidity can be easily obtained. From the viewpoint of obtaining these operation and effects more reliably, the ratio Ca/A is preferably 0.15 or less, more preferably 0.10 or less, still more preferably 0.08 or less. From the same viewpoint, the ratio Ct/A is preferably 0.18 or less, more preferably 0.15 or less, still more preferably 0.10 or less, particularly preferably 0.08 or less. A method for calculating the average cross-sectional area A of the expanded bead, the average cross-sectional area Ca per defective portion, and the total cross-sectional area Ct of the defective portion(s) will be described later.

In configuring the preferable range of the value of the ratio Ca/A, the upper limit value and the lower limit value of the ratio Ca/A described above can be arbitrarily combined. For example, a preferable range of the value of the ratio Ca/A may be 0.02 or more and 0.15 or less, 0.02 or more and 0.10 or less, or 0.02 or more and 0.08 or less. Similarly, in configuring the preferable range of the value of the ratio Ct/A, the upper limit value and the lower limit value of the ratio Ct/A described above can be arbitrarily combined. For example, a preferable range of the value of the ratio Ct/A may be 0.03 or more and 0.18 or less, 0.03 or more and 0.15 or less, 0.03 or more and 0.10 or less, or 0.03 or more and 0.08 or less.

In addition, in the cracking filling step, the expanded beads are filled so that the filling rate F of the expanded beads represented by Formula (1) below is 125% or more and 220% or less, whereby the above-described operation and effect can be reliably obtained.

$$F = \{a/(b \times c)\} \times 100 \qquad \cdots \ (1)$$

In Formula (1) above, a represents the mass (unit: kg) of the expanded beads filled represents the mold, b is the bulk density (unit: $kg/m^3$) of the expanded beads, and c represents the capacity (unit: $m^3$) of the molding cavity.

When the filling rate F of the expanded beads in the cracking filling step is too low, there is a possibility of causing an increase in the water content and an increase in the drying time of the molded article. From the viewpoint of more reliably avoiding these problems, the filling rate F of the expanded beads in the cracking filling step is preferably 130% or more, more preferably 135% or more.

On the other hand, when the filling rate F in the cracking filling step is too high, steam is less likely to spread in the mold in the in-mold molding step, which may cause a decrease in fusion bondability, a decrease in surface property (appearance) of the molded article, and a decrease in rigidity. In this case, it may be difficult to curtail shrinkage and deformation of the molded article when the aging step is omitted. From the viewpoint of more reliably avoiding these problems, the filling rate of the expanded beads in the cracking filling step is preferably 200% or less, more preferably 180% or less, still more preferably 150% or less.

In configuring the preferable range of the filling rate F in the cracking filling step, the upper limit value and the lower limit value of the filling rate F described above can be arbitrarily combined. For example, a preferable range of the filling rate F may be 130% or more and 200% or less, 130% or more and 180% or less, or 135% or more and 150% or less.

The filling rate F of the expanded beads described above can be adjusted, for example, by changing the shape of the expanded beads, the dimension $\delta$ (unit: mm) of the cracking gap in the in-mold molding, the maximum value $P_{max}$ of the compression rate described later, and the like. As shown in Fig. 1, the dimension $\delta$ (unit: mm) of the cracking gap is a distance from the fixed mold 11 to the movable mold 13 in the opening/closing direction in a state where the filling of the molding cavity 12 with the expanded beads 2 is completed. The dimension $\delta$ of the cracking gap is also equal to the amount of movement of the movable mold 13 in the opening/closing direction from a state where the filling of molding cavity 12 with the expanded beads 2 has completed to a state where the mold 1 is completely closed.

In the production method, a state where the mold is completely closed, the maximum value $P_{max}$ of the compression rate represented by Formula (3) below is preferably 25% or more and 120% or less.

$$P_{max} = (\delta/L_{min}) \times 100 \qquad \cdots \ (3)$$

In Formula (3) above, $L_{min}$ represents the minimum value (unit: mm) of the length of the molding cavity in the opening/closing direction in a state where the mold is completely closed.

In the production method, even when the maximum value $P_{max}$ of the compression rate is in a relatively large range as described above, the expanded beads have predetermined defective portions, so that the water cooling time during in-mold molding can be shortened. In addition, as described above, since the defective portion or the like serves as a steam passage, a molded article having a high fusion-bonding rate can be more easily obtained. Furthermore, when the maximum value $P_{max}$ of the compression rate is within the above range, the drying time of the molded article can be further shortened.

From the viewpoint of further shortening the drying time of the molded article, the maximum value $P_{max}$ of the compression rate of the expanded beads is more preferably 30% or more, still more preferably 35% or more. On the other hand, the maximum value $P_{max}$ of the compression rate of the expanded beads is more preferably 100% or less, still more preferably 80% or less, particularly preferably 50% or less from the viewpoint of further enhancing the fusion bondability between the expanded beads and from the viewpoint of more reliably curtailing the shrinkage and deformation of the molded article when the aging step is omitted.

In configuring the preferable range of the maximum value $P_{max}$ of the compression rate of the expanded beads, the upper limit value and the lower limit value of the maximum value $P_{max}$ of the compression rate described above can be arbitrarily combined. For example, a preferable range of the maximum value $P_{max}$ of the compression rate may be 30% or more and 100% or less, 30% or more and 80% or less, or 35% or more and 50% or less.

In the production method, an internal pressure applying step of applying an internal pressure to the expanded beads before being filled in the mold may be performed, as necessary. However, as described above, since the expanded beads have appropriate secondary expandability, a good molded article can be easily obtained even when the magnitude of the internal pressure applied in the internal pressure applying step is further reduced or when the internal pressure applying step is omitted. In addition, by further reducing the magnitude of the internal pressure applied in the internal pressure applying step or omitting the internal pressure applying step, the time required for the internal pressure applying step can be reduced, and the productivity of the molded article of expanded beads can be further enhanced.

When the internal pressure applying step is performed, the internal pressure of the expanded beads to be filled in the mold can be, for example, 0.1 MPa (G) (G: gauge pressure) or less and is preferably 0.08 MPa (G) or less. Further, from the viewpoint of the productivity of the molded article of expanded beads, it is particularly preferable to mold the expanded beads without applying an internal pressure to the expanded beads. The pressure (internal pressure) in the cells can be measured by, for example, the method described in JP 2003-201361 A.

In the production method, a specific aspect of the molding cavity is not particularly limited and can be an aspect corresponding to a desired shape of the molded article. For example, the molding cavity 12 may be configured to be able to mold a rectangular parallelepiped molded article as illustrated in Fig. 1. Although not shown in the drawings, the molding cavity may be configured to be able to mold a bottomed box-shaped molded article, a molded article having a portion having a different thickness, or the like.

An average length $L_A$, which is represented by Formula (2) below, of the molding cavity in the opening/closing direction of the mold is preferably 10 mm or more, more preferably 15 mm or more, still more preferably 20 mm or more from the viewpoint of making the above-described effect more beneficial. The upper limit of the average length $L_A$ of the molding cavity in the opening/closing direction is approximately 500 mm, preferably 300 mm, more preferably 200 mm, still more preferably 150 mm.

$$L_A = V/S \qquad \cdots \ (2)$$

In Formula (2) above, V represents the capacity (unit: $mm^3$) of the molding cavity in a state where the mold is completely closed, and S represents the projected area (unit: $mm^2$) when the molding cavity is projected in the opening/closing direction of the mold.

In configuring the preferable range of the average length $L_A$ of the molding cavity in the opening/closing direction, the upper limit value and the lower limit value of the average length $L_A$ described above can be arbitrarily combined. For example, a preferable range of the average length $L_A$ may be 10 mm or more and 300 mm or less, 10 mm or more and 200 mm or less, 15 mm or more and 200 mm or less, or 15 mm or more and 150 mm or less.

By setting the average length $L_A$ of the molding cavity within the specific range, a molded article having an average thickness substantially equal to the average length $L_A$ can be obtained. In addition, since the production method exhibits the above-described operation and effect, according to the production method, a good molded article can be obtained even when the average length $L_A$ of the molding cavity is relatively large within the above-described range, such as 55 mm or more.

In the in-mold molding step, the expanded beads are heated by supplying steam into the molding cavity. The molding temperature during in-mold molding can be controlled with the molding pressure, that is, the pressure of steam supplied into the molding cavity. When the molding temperature (that is, the molding pressure) during in-mold molding is increased, the expanded beads are easily fusion-bonded to each other, but the cooling time in the mold tends to be long. On the other hand, when the molding temperature is decreased, the cooling time in the mold can be shortened, but the expanded beads tend to be hardly fusion-bonded to each other. From the viewpoint of the production efficiency of the molded article, it is preferable to perform molding at a molding pressure as low as possible. From such a viewpoint, the molding pressure is, for example, preferably in the range of 0.18 MPa (G) or more and 0.30 MPa (G) or less, more preferably in the range of 0.22 MPa (G) or more and 0.28 MPa (G) or less in terms of gage pressure.

In the production method, the aging step of leaving the molded article after demolding to stand for a predetermined time in a high-temperature atmosphere adjusted to a temperature of, for example, about 60°C to 80°C may be performed when needed. However, shrinkage and deformation of the molded article can be curtailed even when the aging step in a high-temperature atmosphere is not performed on the molded article after demolding. When the aging step is omitted, for example, the shape of the molded article can be stabilized by leaving the molded article after demolding for 12 hours or longer in an environment of 23°C.

(Molded Article of Expanded Beads)

The molded article obtained by the production method has an open cell structure. The open cell structure is a minute space portion communicating with the outside of the molded article. The open cell structure is formed by complicated connection of voids formed by connecting defective portions such as through holes and grooves of a plurality of expanded beads, voids formed by connecting defective portions of expanded beads with voids formed between the expanded beads, voids formed by connecting voids between the expanded beads, open cell portions of the expanded beads constituting the molded article, and the like.

The density of the molded article is preferably 10 kg/m$^3$ or more and 150 kg/m$^3$ or less. In this case, the lightweight property and rigidity of the molded article can be improved in a well-balanced manner. From the viewpoint of further improving the rigidity of the molded article, the density of the molded article is more preferably 15 kg/m$^3$ or more, still more preferably 20 kg/m$^3$ or more. From the viewpoint of further improving the lightweight property of the molded article, the density of the molded article is more preferably 60 kg/m$^3$ or less, still more preferably 50 kg/m$^3$ or less, particularly preferably 45 kg/m$^3$ or less. The density of the molded article is calculated by dividing the mass (unit: g) of the molded article by the volume (unit: L) determined from the outer dimensions of the molded article and performing conversion of the unit. When the molded article has a complicated shape, for example, at least partially, and it is not easy to determine the volume from the outer dimensions of the molded article, the volume of the molded article can be determined by the submersion method.

In configuring the preferable range of the density of the molded article, the upper limit value and the lower limit value of the density of the molded article described above can be arbitrarily combined. For example, a preferable range of the density of the molded article may be 10 kg/m$^3$ or more and 60 kg/m$^3$ or less, 15 kg/m$^3$ or more and 50 kg/m$^3$ or less, or 20 kg/m$^3$ or more and 45 kg/m$^3$ or less.

Conventionally, in the case of producing a molded article having a small density, the molded article is likely to be significantly deformed after demolding, and it is particularly difficult to omit the aging step. On the other hand, the aging step for the above molded article of expanded beads can be omitted even when the density is low, and the molded article has a desired shape and is excellent in appearance and rigidity even without aging. From the viewpoint of effectively exhibiting this effect, the density of the molded article is preferably set to the above range.

The voidage of the molded article is preferably 4% or more, more preferably 5% or more from the viewpoint of more reliably obtaining the effect of curtailing significant shrinkage and deformation of the molded article when the aging step is not performed. From the viewpoint of further enhancing the rigidity and appearance of the molded article, the voidage of the molded article is preferably 12% or less, more preferably 10% or less, still more preferably 8% or less.

In configuring the preferable range of the voidage of the molded article, the upper limit value and the lower limit value of the voidage described above can be arbitrarily combined. For example, a preferable range of the voidage of the molded article may be 5% or more and 10% or less, or 5% or more and 8% or less.

The voidage of the molded article is measured and calculated, for example, as follows. Specifically, a test piece having a rectangular parallelepiped shape (such as 20 mm in length × 100 mm in width × 20 mm in height) is first cut out from the central portion of the molded article. Then, the test piece is immersed in ethanol contained in a measuring cylinder, and a true volume Vc (unit: L) of the test piece is determined from the increase in the liquid level of ethanol. In addition, an apparent volume Vd (unit: L) is determined from the outer dimensions of the test piece. The voidage (unit: %) of the molded article is expressed by Formula (4) below using the true volume Vc and the apparent volume Vd of the test piece obtained as described above.

$$\text{Voidage} = [(V_d - V_c)/V_d] \times 100 \quad \cdots \quad (4)$$

For example, the molded article is also used as a sound absorbing material, an impact absorbing material, a cushioning material, and the like in various fields such as the vehicle field such as automobiles and the construction field.

(Thermoplastic resin expanded beads)

The expanded beads used in the production method each have a columnar shape and each have at least one of one or two kinds of defective portions selected from the group consisting of a through hole penetrating the inside of the expanded bead in the axial direction and a groove extending on a side peripheral surface of the expanded bead in the axial direction. When the expanded beads each have a defective portion(s), an open cell structure is more easily formed in the molded article.

<Expanded Beads Having Through Holes>

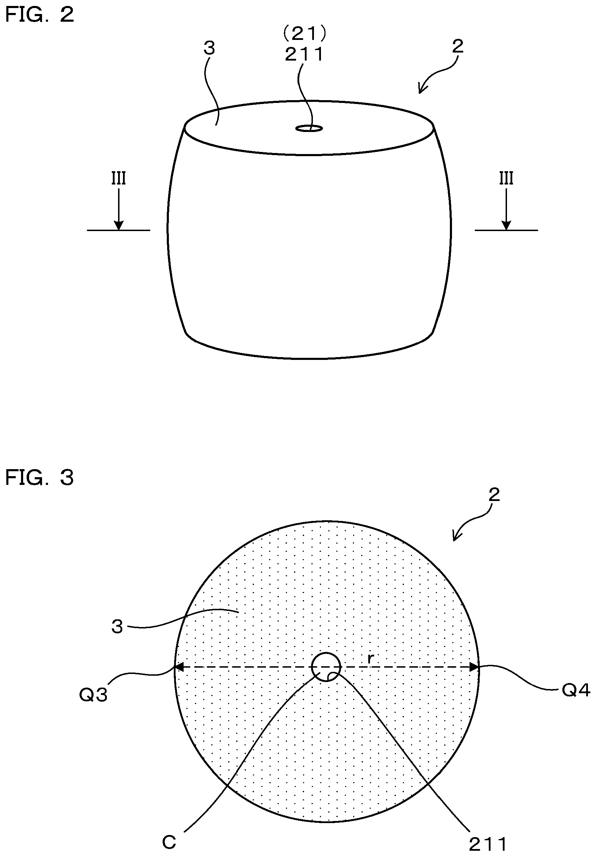

Figs. 2 and 3 show an example of the expanded bead 2 having a through hole 211 as a defective portion 21. The expanded bead 2 shown in Fig. 2 has a tubular shape having the through hole 211. The shape of the entire expanded bead may be, for example, a circular columnar shape or a prismatic columnar shape. The through hole preferably penetrates the expanded bead in an axial direction thereof. The number of through holes only needs to be one or more.

When the expanded bead has the through hole as the defective portion, the through hole preferably has an average hole diameter d of 0.1 mm or more and less than 1 mm. In this case, the ratio Ca/A and/or Ct/A of the expanded bead can be easily adjusted to the above range. By setting the average hole diameter d of the through holes to 0.1 mm or more, it is possible to avoid the through holes of the expanded beads from being crushed and blocked during in-mold molding and to more reliably provide the effect of the through holes. From the same viewpoint, the average hole diameter d of the through holes is more preferably 0.2 mm or more, still more preferably 0.4 mm or more.

On the other hand, when the average hole diameter d of the through holes is too large, the ratio Ca/A and/or Ct/A of the expanded bead may be excessively large. Therefore, it may take an excessively long time to dry the molded article. In addition, gaps between expanded beads, irregularities derived from the through holes, and the like may be easily formed on the surface of the molded article, and the rigidity of the molded article may be reduced. In addition, when the filling rate F of the expanded beads is further increased in order to avoid formation of gaps between the expanded beads, irregularities derived from the through holes, and the like, the density of the molded article becomes remarkably high, and it may be difficult to obtain a lightweight molded article. When the filling rate F is further increased, the molding temperature required for obtaining a good molded article may be significantly increased. In this case, it may be impossible to curtail significant shrinkage and deformation of the molded article when the aging step is omitted. By setting the average hole diameter d of the through holes to 1 mm or less, these problems can be easily avoided. From the same viewpoint, the average hole diameter d of the through holes is more preferably 0.95 mm or less, still more preferably 0.9 mm or less, particularly preferably 0.85 mm or less.

In configuring the preferable range of the average hole diameter d of the through holes, the upper limit value and the lower limit value of the average hole diameter d described above can be arbitrarily combined. For example, a preferable range of the average hole diameter d may be 0.2 mm or more and 0.95 mm or less, 0.2 mm or more and 0.9 mm or less, or 0.4 mm or more and 0.85 mm or less.

The average hole diameter d of the through holes 211 of the expanded beads 2 is determined as follows. First, the expanded bead 2 is cut at the center in the axial direction along a plane perpendicular to the axial direction, and the cut surface is exposed as shown in Fig. 3. Next, a photograph of the cut surface is taken, and the cross-sectional area (specifically, the area of the opening) of the through hole in the cut surface is calculated. Then, the diameter of a virtual perfect circle having the same area as the cross-sectional area of the through hole is calculated, and this value is taken as the hole diameter of the through hole of each expanded bead. The above operation is performed on 50 or more expanded beads, and the arithmetic average value of the obtained hole diameters of the through holes is taken as the average hole diameter d of the through holes of the expanded beads. Even when the size of the through hole of each expanded bead is not uniform in the through hole diameter in the penetration direction, the through hole diameter of each expanded bead is determined by the hole diameter of the through hole on the cut surface as described above.

The average hole diameter d of the through holes can be adjusted to fall within the above-mentioned specific range by adjusting the size of an average hole diameter dr of the through holes in the resin particles described later, the apparent density of the expanded beads, and the like. In addition, the average hole diameter d can be more easily adjusted to a small value by using second-step expanded beads produced by second expansion as the expanded beads.

An average outer diameter D of the expanded beads is preferably 2 mm or more, more preferably 2.5 mm or more, still more preferably 3 mm or more from the viewpoint that the wall thickness of the expanded beads increases and the secondary expandability of the expanded beads and the rigidity of the molded article are improved, and from the viewpoint that the deformation and shrinkage of the molded article can be more reliably curtailed when the aging step is omitted. On the other hand, from the viewpoint of improving the filling property of the expanded beads into the mold, the average outer diameter D of the expanded beads is preferably 8 mm or less, more preferably 5 mm or less, still more preferably 4.5 mm or less.

In configuring the preferable range of the average outer diameter D of the expanded beads, the upper limit value and the lower limit value of the average outer diameter D described above can be arbitrarily combined. For example, a preferable range of the average outer diameter D may be 2 mm or more and 8 mm or less, 2.5 mm or more and 5 mm or less, or 3 mm or more and 4.5 mm or less.

The ratio d/D of the average hole diameter d of the through holes to the average outer diameter D of the expanded beads is preferably 0.4 or less, more preferably 0.35 or less, still more preferably 0.3 or less, particularly preferably 0.25 or less. By setting the ratio d/D to 0.4 or less, the secondary expandability of the expanded beads during in-mold molding can be moderately improved, and a molded article having excellent surface properties and rigidity can be more easily obtained. On the other hand, from the viewpoint of further avoiding the through holes of the expanded beads from being crushed and blocked during in-mold molding and more reliably exhibiting the effect of the through holes, the ratio d/D is preferably 0.1 or more. The method for calculating the average outer diameter D of the expanded beads will be described later.

In configuring the preferable range of the value of the ratio d/D, the upper limit value and the lower limit value of the ratio d/D described above can be arbitrarily combined. For example, a preferable range of the value of the ratio d/D may be 0.1 or more and 0.4 or less, 0.1 or more and 0.35 or less, 0.1 or more and 0.3 or less, or 0.1 or more and 0.25 or less.

An average wall thickness t of the expanded beads having through holes is preferably 1.0 mm or more and 2.0 mm or less. When the average wall thickness t is within this range, the wall thickness of the expanded beads is sufficiently thick, so that the secondary expandability during in-mold molding is further improved. In addition, the expanded beads are more hardly crushed against an external force, and the rigidity of the molded article is further improved. From such a viewpoint, the average wall thickness t of the expanded beads is more preferably 1.2 mm or more.

The average wall thickness t of the expanded beads is a distance from the surface (that is, the outer surface) of each expanded bead to the outer edge (that is, the inner surface of the expanded bead) of the through hole and is a value determined by Formula (5) below.

$$t = (D-d)/2 \qquad \cdots (5)$$

  d: Average hole diameter of through holes (unit: mm)
  D: Average outer diameter of expanded beads (unit: mm)

The ratio t/D of the average wall thickness t to the average outer diameter D of the expanded beads is preferably 0.30 or more and 0.50 or less. When the ratio t/D is within the above range, the filling property of the expanded beads is better in the in-mold molding of the expanded beads. In addition, the secondary expandability can be further enhanced while keeping the water cooling time short. Therefore, a molded article having excellent appearance and rigidity can be produced with high productivity at a lower molding heating temperature. From such a viewpoint, the ratio t/D of the average wall thickness t to the average outer diameter D of the expanded beads is more preferably 0.32 or more, still more preferably 0.35 or more.

<Expanded Beads Having Grooves>

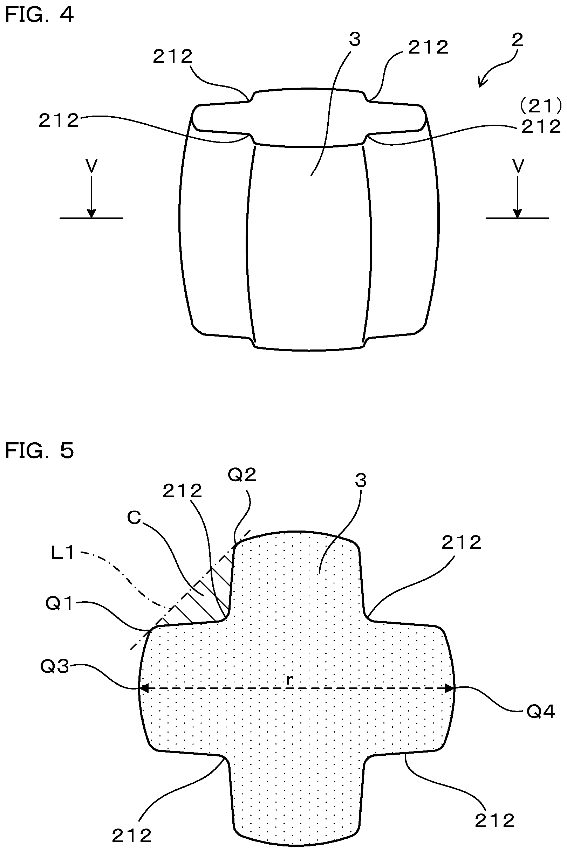

Figs. 4 and 5 show an example of an expanded bead 2 having grooves 212 as defective portions 21. The expanded bead 2 shown in Fig. 4 has a columnar shape and has at least one groove 212 on the side peripheral surface thereof.

The "groove" described above refers to a recess that is provided on the side peripheral surface of the expanded bead 2 and extends along the axial direction of the expanded bead 2. More specifically, as shown in Fig. 5, the groove 212 of the expanded bead 2 is observed as a portion where the outline of the expanded bead is recessed inward in a cross section appearing when the expanded bead 2 is cut along a plane perpendicular to the axial direction of the expanded bead 2.

The shape and the like of the expanded bead 2 can take various forms. For example, as shown in Figs. 4 and 5, the expanded bead 2 may have a columnar shape in which a cross section perpendicular to the axial direction is a cross shape. The expanded bead 2 having such a shape has four grooves 212 on the side peripheral surface thereof. The cross-sectional shape of the expanded bead in the cross section perpendicular to the axial direction is not limited to the shape in Figs. 4 and 5 and can take various forms such as a shape based on a circle, a shape based on a triangle, and a shape based on a quadrangle.

It is sufficient that the number of grooves 212 provided in the expanded bead is one or more. In addition, the cross-sectional shape of the groove 212 in the cross section perpendicular to the axial direction of the expanded bead is not limited to the V-shape illustrated in Figs. 4 and 5 and can take various forms such as a semicircular shape, a quadrangular shape, and a U-shape. When the expanded bead has two or more grooves 212, all the grooves 212 may have the same cross-sectional shape or may have cross-sectional shapes different from each other.

The expanded bead preferably has two or more and six or less grooves. In this case, an open cell structure is more easily formed in the molded article. Therefore, even when the aging step is omitted, the molded article is less likely to be deformed.

When the expanded bead has two or more grooves, these grooves are preferably arranged at equal intervals on the side peripheral surface of the expanded bead. In other words, when the expanded bead has a plurality of grooves, these grooves are preferably arranged at symmetrical positions with respect to the central axis of the expanded bead. When such an expanded bead is subjected to in-mold molding, an open cell structure is more easily formed in the molded article. Therefore, even when the aging step is omitted, the molded article is less likely to be deformed.

<Average Cross-Sectional Area Ca per Defective Portion and Total Cross-Sectional Area Ct>

In a cut surface obtained by cutting the expanded bead at a center in the axial direction along a plane perpendicular to the axial direction, the ratio Ca/A of the average cross-sectional area Ca per defective portion to the average cross-sectional area A of the expanded bead is 0.01 or more and 0.20 or less, and the ratio Ct/A of the total cross-sectional area Ct of the defective portion(s) to the average cross-sectional area A of the expanded bead is 0.02 or more and 0.20 or less. As described above, in the production method, by using the expanded beads having the specific shape, the productivity of the molded article can be remarkably improved, and a molded article excellent in surface property and fusion bondability can be easily obtained.

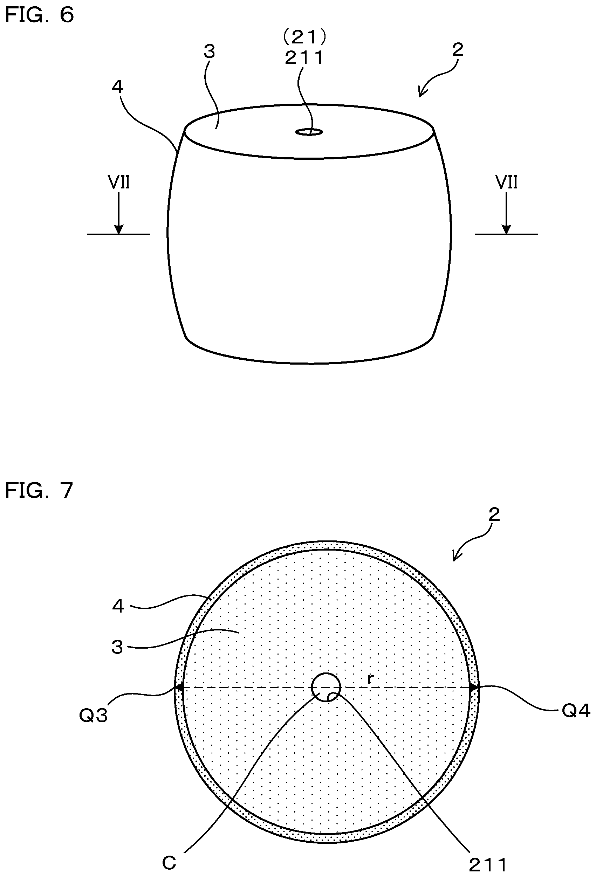

The method for calculating the average cross-sectional area A of the expanded bead described above is as follows. First, an expanded bead is cut at the center in the axial direction thereof along a plane perpendicular to the axial direction, and the cut surface is exposed. The cross-sectional area of the expanded bead 2 at the cut surface is measured. For example, as shown in Figs. 3 and 5, when the expanded beads 2 are composed of only a foamed layer 3, the cross-sectional area of the expanded beads 2 is equal to the cross-sectional area of the foamed layer 3 at the cut surfaces. As shown in Fig. 7, when the expanded bead 2 includes the foamed layer 3 and a fusion-bondability improving layer 4 covering the foamed layer 3, the cross-sectional area of the expanded bead 2 is the sum of the cross-sectional area of the foamed layer 3 and the cross-sectional area of the fusion-bondability improving layer 4 at the cut surface. The cross-sectional area of the expanded bead 2 at the cut surface can be measured, for example, by taking a photograph of the cut surface of the expanded bead and analyzing the image. The cross-sectional area of the defective portion is not included in the cross-sectional area of the expanded bead.

The above operation is performed on 100 or more expanded beads, and the arithmetic average value of the cross-sectional areas of the expanded beads obtained is taken as the average cross-sectional area A of the expanded bead at the cut surface.

A method for calculating the average cross-sectional area Ca per defective portion and the total cross-sectional area Ct of the defective portion(s) is as follows. First, an expanded bead is cut at the center in the axial direction thereof along a plane perpendicular to the axial direction, and the cut surface is exposed. As illustrated in Figs. 3 and 7, when the defective portion 21 is the through hole 211, the cross-sectional area C of the through hole 211 in the cut surface is measured.

When the defective portions 21 are the grooves 212, as shown in Fig. 5, a tangent line L1 that is in contact with the contour of the expanded bead 2 at two points Q1 and Q2 and does not pass through the inside of the expanded bead 2 is drawn outside each groove 212 in the cut surface. Then, the area of the region surrounded by the contour of the expanded bead 2 and the tangent line L1 is calculated, and this area is defined as the cross-sectional area C of each groove 212. That is, the cross-sectional area C of each groove 212 is the area of the hatched region in Fig. 5.

The total of the cross-sectional areas of the defective portions 21 in each expanded bead 2 is calculated by summing the cross-sectional area C of the through hole 211 and the cross-sectional area C of the groove 212 thus obtained. The total of the cross-sectional areas of the defective portions 21 is divided by the number of the defective portions 21 to calculate the cross-sectional area per defective portion in each expanded bead 2.

The above operation is performed on 100 or more expanded beads, and the arithmetic average value of the total of the cross-sectional areas of the defective portions thus obtained is taken as the total cross-sectional area Ct of the defective portion(s). In addition, an average value of the obtained cross-sectional areas per defective portion obtained is defined as the average cross-sectional area Ca per defective portion.

The method for calculating the average outer diameter D of the expanded beads described above is as follows. First, an expanded bead 2 is cut at the center in the axial direction thereof along a plane perpendicular to the axial direction to expose the cut surface as shown in Figs. 3, 5, and other figures. Two points Q3 and Q4 are determined on the contour of the cut surface of the expanded bead 2 so as to have the longest distance therebetween, and the distance (that is, the maximum outer diameter of the expanded bead at the cut surface) between these two points is defined as an outer diameter r of each expanded bead 2. Then, the arithmetic average value of the outer diameters r measured for 100 or more expanded beads 2 is taken as the average outer diameter D of the expanded beads. The outer diameter of the expanded bead 2 at the cut surface can be measured, for example, by taking a photograph of the cut surface of the expanded bead and analyzing the image. Even when the outer diameter of each expanded bead is not uniform in the penetration direction, the outer diameter of each expanded bead is determined by the outer diameter at the cut surface as described above.

<Apparent Density and Bulk Density of Expanded Beads>

The bulk density of the expanded beads is preferably 10 kg/m$^3$ or more and 50 kg/m$^3$ or less, more preferably 20 kg/m$^3$ or more and 35 kg/m$^3$ or less. In this case, the lightweight property and rigidity of the molded article can be improved in a well-balanced manner. Conventionally, in particular, in the case of producing a molded article having a small density (that is, a molded article with a high molded article magnification), the molded article is likely to be significantly deformed after demolding, and it is difficult to omit the aging step. On the other hand, with the above expanded beads, even when the apparent density is small, the aging step can be omitted, and a molded article having a good appearance can be produced even without aging.

The ratio of the apparent density of the expanded beads to the bulk density of the expanded beads (that is, apparent density/bulk density) is preferably more than 1.6, more preferably 1.7 or more. In this case, the cooling time after in-mold molding can be further shortened, and a lightweight and favorable molded article of expanded beads can be more easily obtained. In addition, it is possible to more reliably curtail deformation and shrinkage of the molded article when the aging step is omitted. The ratio of the apparent density of the expanded beads to the bulk density of the expanded beads (that is, apparent density/bulk density) is preferably less than 2.0, more preferably 1.9 or less. In this case, the drying time of the molded article can be further shortened. In addition, it is possible to further improve the surface property and rigidity of the obtained molded article.

In configuring the preferable range of the value of the ratio of the apparent density of the expanded beads to the bulk density of the expanded beads, the upper limit value and the lower limit value of the ratio described above can be arbitrarily combined. For example, a preferable range of the value of apparent density/bulk density may be 1.7 or more and less than 2.0, or may be 1.7 or more and 1.9 or less.

The method for calculating the bulk density of the expanded beads is as follows. First, the expanded beads are conditioned by allowing the expanded beads to stand for 24 hours or longer in an environment of a relative humidity of 50%, a temperature of 23°C, and an atmospheric pressure of 1 atm. The conditioned expanded beads are filled in a measuring cylinder so as to be naturally deposited, and the bulk volume (unit: L) of the expanded beads is read on the scale of the measuring cylinder. Then, the bulk density (unit: kg/m$^3$) of the expanded beads can be obtained by unit conversion of the value obtained by dividing the mass (unit: g) of the expanded beads in the measuring cylinder by the above-described bulk volume. It is noted that the bulk density of the expanded beads is a value measured under an environment of an atmospheric pressure of 1 atm using the expanded beads in a natural state without compression.

The method for calculating the apparent density of the expanded beads is as follows. First, the expanded beads are conditioned by allowing the expanded beads to stand for 1 day in an environment of a relative humidity of 50%, a temperature of 23°C, and an atmospheric pressure of 1 atm. After measuring the mass (unit: g) of the expanded beads, the expanded beads are immersed in alcohol (such as ethanol) having a temperature of 23°C contained in a measuring cylinder with a wire mesh or the like, and the volume (unit: L) of the expanded beads is determined from the increase in the liquid level. Thereafter, the apparent density (unit: kg/m$^3$) of the expanded beads can be obtained by unit conversion of the value obtained by dividing the mass of the expanded beads by the volume of the expanded beads.

<Foamed Layer>

The expanded beads each have a foamed layer including a thermoplastic resin as a base resin. The thermoplastic resin constituting the foamed layer is preferably a crystalline thermoplastic resin having crystallinity, such as a polyolefin-based resin including a polypropylene-based resin, a polyethylene-based resin and the like, a polyamide-based resin, and a crystalline polyester-based resin. In the present description, the polypropylene-based resin refers to a homopolymer of a propylene monomer and a propylene-based copolymer containing 50 mass% or more of a propylene-derived structural unit. The polyethylene-based resin refers to a homopolymer of an ethylene monomer and an ethylene-based copolymer containing 50 mass% or more of an ethylene-derived structural unit.

In the present description, the polyamide-based resin refers to a polyamide and a polyamide copolymer. In the case where the base resin of the foamed layer is a polyamide-based resin, the polyamide-based resin constituting the foamed layer is preferably a polyamide copolymer. Examples of the polyamide copolymer include polycaproamide/polyhexamethylene adipamide copolymer (nylon 6/66), caprolactam/hexamethylenediamino adipate/lauryllactam (nylon 6/66/12), and caprolactam/lauryllactam copolymer (nylon 6/12).

In the present description, the expression "having crystallinity" means that a heat of an endothermic peak accompanying melting of the resin, which is determined from a DSC curve obtained at a heating rate of 10°C/min using a heat flux differential scanning calorimeter under the definition of "The case of measurement of heat of fusion after a definite heat treatment" (setting both a heating rate and a cooling rate during conditioning of a test piece to 10°C/min) that is described in JIS K 7122 (1987), is 5 J/g or more. The heat of the endothermic peak is preferably 15 J/g or more, more preferably 30 J/g or more.

The foamed layer may contain a polymer other than the thermoplastic resin as long as the above-mentioned effect is not impaired. Examples of another polymer include elastomers. The amount of another polymer in the foamed layer is preferably 20 mass% or less, more preferably 10 mass% or less, still more preferably 5 mass% or less, particularly preferably 0, which means that the foamed layer substantially contains only the thermoplastic resin as a polymer.

In addition, the thermoplastic resin that is the base resin of the foamed layer may contain additives such as a cell adjusting agent, a crystal nucleating agent, a flame retardant, a flame retardant aid, a plasticizer, an antistatic agent, an antioxidant, an ultraviolet inhibitor, a light stabilizer, a conductive filler, an antibacterial agent, and a colorant as long as the above-described operation and effect are not impaired. The amount of the additives in the foamed layer is preferably, for example, 0.01 parts by mass or more and 10 parts by mass or less with respect to 100 parts by mass of the thermoplastic resin.

The thermoplastic resin constituting the foamed layer is preferably a polyolefin-based resin. The thermoplastic resin constituting the foamed layer is preferably a polypropylene-based resin among polyolefin-based resins, more preferably a propylene-based copolymer obtained by copolymerizing propylene with another monomer. In this case, the amount of the polymer other than the polypropylene-based resin in the foamed layer is preferably 20 mass% or less, more preferably 10 mass% or less, still more preferably 5 mass% or less, particularly preferably 0, which means that the foamed layer substantially contains only the polypropylene-based resin as a polymer.

Preferable examples of the propylene-based copolymer include a copolymer of propylene and an $\alpha$-olefin having 4 to 10 carbon atoms, such as an ethylene-propylene copolymer, a butene-propylene copolymer, a hexene-propylene copolymer, and an ethylene-propylene-butene copolymer. These copolymers may be, for example, random copolymers, block copolymers, or the like and are preferably random copolymers. The foamed layer may contain one kind of polypropylene-based resin or two or more kinds of polypropylene-based resins.

Among these polypropylene-based resins, the thermoplastic resin constituting the foamed layer is particularly preferably an ethylene-propylene random copolymer containing 0.5 mass% or more and 3.5 mass% or less of an ethylene component. With the expanded beads including such a foamed layer, it is possible to more easily obtain a molded article that is excellent in in-mold moldability, and also in rigidity and surface property, and can avoid deformation and shrinkage even when the aging step is omitted. Further, in this case, the secondary expandability of the expanded beads can be further enhanced, and the aging step can be omitted even when the expanded beads having no internal pressure applied or the expanded beads having an internal pressure of less than 0.1 MPa (G) applied are used.

From the viewpoint of further enhancing the moldability of the expanded beads and obtaining a molded article excellent in energy absorption characteristics, the amount of the ethylene component contained in the ethylene-propylene random copolymer is preferably 2.0 mass% or more and 3.5 mass% or less.

The above "ethylene component" and "propylene component" respectively refer to a structural unit derived from ethylene and a structural unit derived from propylene in the ethylene-propylene copolymer. The amount of the ethylene component is the mass proportion of the ethylene component when the total of the ethylene component and the propylene component is assumed to be 100 mass%. The amount of each component in the ethylene-propylene copolymer can be determined on the basis of the result of IR spectrum measurement.

In the case where the base resin of the foamed layer is a polypropylene-based resin, a melting point Tmc of the polypropylene-based resin is preferably 155°C or lower. In this case, a molded article excellent in appearance and rigidity can be formed at a lower molding temperature (that is, a low molding pressure). From the viewpoint of improving this effect, the melting point Tmc of the polypropylene-based resin constituting the foamed layer is preferably 150°C or lower, more preferably 145°C or lower. On the other hand, from the viewpoint of further improving the heat resistance, mechanical strength, and the like of the molded article, the melting point Tmc of the polypropylene-based resin constituting the foamed layer is preferably 135°C or higher, more preferably 138°C or higher, still more preferably 140°C or higher.

In configuring the preferable range of the value of the melting point Tmc of the polypropylene-based resin constituting the foamed layer, the upper limit value and the lower limit value of the melting point Tmc described above can be arbitrarily combined. For example, a preferable range of the melting point Tmc may be 135°C or higher and 155°C or lower, 138°C or higher and 150°C or lower, or 140°C or higher and 145°C or lower.

In the case where the thermoplastic resin constituting the foamed layer has crystallinity, the melting point of the thermoplastic resin can be determined on the basis of a DSC curve obtained by performing differential scanning calorimetry (that is, DSC) according to JIS K 7121-1987. First, the test piece is conditioned according to "(2) The case of measurement of melting temperature after a definite heat treatment". The conditioned test piece is heated from 30°C to 200°C at a heating rate of 10°C/min to obtain a DSC curve, and the vertex temperature of the melting peak appearing in the DSC curve is defined as the melting point Tmc of the thermoplastic resin. In the case where a plurality of melting peaks appears in the DSC curve, the vertex temperature of the melting peak having the largest area is taken as the melting point Tmc.

In the case where the base resin of the foamed layer is a polypropylene-based resin, the melt mass flow rate (that is, MFR) of the polypropylene-based resin is preferably 5 g/10 min or more, more preferably 6 g/10 min or more, still more preferably 7 g/10 min or more. In this case, the expandability and moldability can be further improved. On the other hand, from the viewpoint of further enhancing the rigidity of the molded article, the MFR of the polypropylene-based resin is preferably 12 g/10 min or less, more preferably 10 g/10 min or less. It is noted that the MFR of the polypropylene-based resin is a value measured under the conditions of a test temperature of 230°C and a load of 2.16 kg in accordance with JIS K 7210-1:2014.

In configuring the preferable range of the MFR of the polypropylene-based resin constituting the foamed layer, the upper limit value and the lower limit value of the MFR described above can be arbitrarily combined. For example, a preferable range of the MFR may be 5 g/10 min or more and 12 g/10 min or less, 6 g/10 min or more and 12 g/10 min or less, or 7 g/10 min or more and 10 g/10 min or less.

In the case where the base resin of the foamed layer is a polypropylene-based resin, the flexural modulus of the polypropylene-based resin is preferably 800 MPa or more and 1600 MPa or less. From the viewpoint of enhancing the rigidity of the molded article and from the viewpoint of more reliably curtailing the dimensional change when the aging step is omitted, the flexural modulus of the polypropylene-based resin constituting the foamed layer is preferably 800 MPa or more, more preferably 850 MPa or more, still more preferably 900 MPa or more. On the other hand, from the viewpoint that a molded article excellent in appearance and rigidity can be formed at a lower molding temperature (that is, a low molding pressure) and from the viewpoint of obtaining a molded article of expanded beads excellent in energy absorption characteristics, the flexural modulus of the polypropylene-based resin constituting the foamed layer is preferably less than 1200 MPa, more preferably 1100 MPa or less, still more preferably 1000 MPa or less. It is noted that the flexural modulus of the polypropylene-based resin can be determined in accordance with JIS K 7171:2008.

In configuring the preferable range of the flexural modulus of the polypropylene-based resin constituting the foamed layer, the upper limit value and the lower limit value of the flexural modulus described above can be arbitrarily combined. For example, from the viewpoint of enhancing the rigidity of the molded article and from the viewpoint of more reliably curtailing the dimensional change when the aging step is omitted, the flexural modulus of the polypropylene-based resin constituting the foamed layer may be 850 MPa or more and 1600 MPa or less, or may be 900 MPa or more and 1600 MPa or less. From the viewpoint that a molded article excellent in appearance and rigidity can be formed at a lower molding temperature (that is, a low molding pressure) and from the viewpoint of obtaining a molded article of expanded beads excellent in energy absorption characteristics, the flexural modulus of the polypropylene-based resin constituting the foamed layer may be 800 MPa or more and less than 1200 MPa, 800 MPa or more and 1100 MPa or less, or 800 MPa or more and 1000 MPa or less.

Conventionally, in particular, when expanded beads composed of a polypropylene-based resin having a flexural modulus of less than 1200 MPa are subjected to in-mold molding, the molded article after demolding tends to be significantly shrunk and deformed if the aging step is omitted, probably because the resistance to shrinkage and deformation after demolding is small. On the other hand, according to the method for producing a molded article described above, even when expanded beads composed of a polypropylene-based resin having a flexural modulus of, for example, less than 1200 MPa are used, shrinkage and deformation of the molded article are easily curtailed, and the aging step can be omitted.

In the case where the base resin of the foamed layer is a polyamide-based resin, the flexural modulus of the polyamide-based resin is preferably 800 MPa or more and 1600 MPa or less, more preferably 1000 MPa or more and 1600 MPa or less. When the flexural modulus of the polyamide-based resin is within the above range, unlike an amide-based elastomer having a flexural modulus of approximately 600 MPa or less, the polyamide-based resin is hardly shrunk even when exposed to normal temperature after expansion, and expanded beads having a small apparent density are easily obtained. In addition, it is possible to more reliably curtail the dimensional change when the aging step is omitted. It is noted that the flexural modulus of the polyamide-based resin can be determined in accordance with JIS K 7171:2008. The melting point of the polyamide-based resin is preferably 180°C or higher and 250°C or lower.

In the case where the base resin of the foamed layer is a polyamide-based resin, the melt mass flow rate (that is, MFR) of the polyamide-based resin measured under the conditions of a test temperature of 230°C and a load of 2.16 kg in accordance with JIS K 7210-1:2014 is preferably 1 g/10 min or more and 8 g/10 min or less, more preferably 2 g/10 min or more and 5 g/10 min or less. In this case, the expandability and moldability can be further improved.

<Fusion-Bondability Improving Layer>

The expanded beads each may have a multilayer structure including the foamed layer and the fusion-bondability improving layer that covers the foamed layer, the base resin of the foamed layer being a first thermoplastic resin and the base resin of the fusion-bondability improving layer being a second thermoplastic resin. In this case, the fusion-bondability improving layer may cover the entire surface of the foamed layer or may cover a part of the foamed layer. For example, as shown in Figs. 6 and 7, the fusion-bondability improving layer 4 may be provided on the side peripheral surface of the expanded bead 2 to cover the foamed layer 3.

The fusion-bondability improving layer is a layer provided on the surface of the expanded bead in order to improve the fusion bondability between the expanded beads in in-mold molding. The second thermoplastic resin constituting the fusion-bondability improving layer preferably has a melting point or a softening point lower than the melting point of the first thermoplastic resin that is the base resin of the foamed layer. In the case where the second thermoplastic resin constituting the fusion-bondability improving layer is the same type of crystalline thermoplastic resin as the first thermoplastic resin constituting the foamed layer, the second thermoplastic resin preferably has a crystallinity lower than the crystallinity of the first thermoplastic resin. By covering the foamed layer with such a thermoplastic resin, the expanded beads can be fusion-bonded at a lower molding temperature (that is, a low molding pressure) in in-mold molding. As a result, it is possible to more reliably curtail deformation and shrinkage of the molded article when the aging step is omitted.

The second thermoplastic resin constituting the fusion-bondability improving layer may be a crystalline thermoplastic resin or an amorphous thermoplastic resin. Examples of the crystalline thermoplastic resin used for the fusion-bondability improving layer include polyolefin-based resins. In addition, examples of the amorphous thermoplastic resin used for the fusion-bondability improving layer include polystyrene-based resins. In the case where the foamed layer is composed of a polypropylene-based resin, the second thermoplastic resin constituting the fusion-bondability improving layer is preferably a polyolefin-based resin, more preferably a polyethylene-based resin and/or a polypropylene-based resin, still more preferably a polypropylene-based resin, from the viewpoint of adhesiveness to the foamed layer. Examples of the polypropylene-based resin used as the second thermoplastic resin include an ethylene-propylene copolymer, an ethylene-butene copolymer, an ethylene-propylene-butene copolymer, and a propylene homopolymer. Among them, it is particularly preferable to use an ethylene-propylene copolymer and/or an ethylene-propylene-butene copolymer as the base resin of the fusion-bondability improving layer.

In the case where the second thermoplastic resin constituting the fusion-bondability improving layer is a crystalline thermoplastic resin, the difference Tmc - Tms between the melting point Tmc of the first thermoplastic resin constituting the foamed layer and the melting point Tms of the second thermoplastic resin constituting the fusion-bondability improving layer is preferably 5°C or more, more preferably 6°C or more, still more preferably 8°C or more. In this case, the fusion bondability of the expanded beads can be further improved, and the molding temperature can be further lowered. On the other hand, the difference Tmc - Tms between the melting point Tmc and the melting point Tms is preferably 35°C or less, more preferably 20°C or less, still more preferably 15°C or less from the viewpoint of avoiding peeling between the foamed layer and the fusion-bondability improving layer, adhesion between the expanded beads, and the like. The melting point of the second thermoplastic resin used for the fusion-bondability improving layer is determined on the basis of JIS K 7121:1987. More specifically, the melting point of the second thermoplastic resin used for the fusion-bondability improving layer can be determined under the same conditions and by the same method as those of the first thermoplastic resin constituting the above-mentioned foamed layer.

In configuring the preferable range of the value of the melting point difference Tmc - Tms, the upper limit value and the lower limit value of the melting point difference Tmc - Tms described above can be arbitrarily combined. For example, a preferable range of the melting point difference Tmc - Tms may be 5°C or more and 35°C or less, 6°C or more and 20°C or less, or 8°C or more and 15°C or less.

The method for calculating the crystallinity of the thermoplastic resin described above is as follows. First, DSC is performed in accordance with JIS K 7122-1987, and the heat of crystallization of the thermoplastic resin is calculated based on the acquired DSC curve. Specifically, the thermoplastic resin is conditioned according to "(2) The case of measurement of melting temperature after a definite heat treatment". In the conditioning, the thermoplastic resin is heated from 23°C to 200°C at a heating rate of 10°C/min, and then the temperature of 200°C is held for 10 minutes to melt the thermoplastic resin. Thereafter, the thermoplastic resin is cooled from 200°C to 23°C at a cooling rate of 10°C/min. After the conditioning as described above, the thermoplastic resin is heated from 200°C to 23°C at a heating rate of 10°C/min to obtain a DSC curve at the time of the second heating. The area of the crystallization peak appearing in this DSC curve is calculated, and the heat of fusion is calculated from this value. The value obtained by expressing the ratio of the heat of fusion thus obtained to the heat of fusion of perfect crystals in percentage is defined as the crystallinity (unit: %) of the thermoplastic resin.

When the second thermoplastic resin constituting the fusion-bondability improving layer is an amorphous thermoplastic resin, the difference Tmc - Tss between the melting point Tmc of the first thermoplastic resin constituting the foamed layer and the softening point Tss of the second thermoplastic resin constituting the fusion-bondability improving layer is preferably 5°C or more, more preferably 6°C or more, still more preferably 8°C or more. In this case, the fusion bondability of the expanded beads can be further improved, and the molding temperature can be further lowered. On the other hand, the difference Tmc - Tss between the melting point Tmc and the softening point Tss is preferably 35°C or less, more preferably 20°C or less from the viewpoint of avoiding peeling between the foamed layer and the fusion-bondability improving layer, adhesion between the expanded beads, and the like. The softening point of the amorphous thermoplastic resin used in the fusion-bondability improving layer is a Vicat softening point measured by the A50 method according to JIS K 7206:1999.

In configuring the preferable range of the value of the difference Tmc - Tss, the upper limit value and the lower limit value of the difference Tmc - Tss described above can be arbitrarily combined. For example, a preferable range of the difference Tmc - Tss may be 5°C or more and 35°C or less, 6°C or more and 20°C or less, or 8°C or more and 20°C or less.

The second thermoplastic resin constituting the fusion-bondability improving layer may contain additives such as a crystal nucleating agent, a flame retardant, a flame retardant aid, a plasticizer, an antistatic agent, an antioxidant, an ultraviolet inhibitor, a light stabilizer, a conductive filler, an antibacterial agent, and a colorant as long as the above-described operation and effect are not impaired. The amount of the additives in the fusion-bondability improving layer is preferably, for example, 0.01 parts by mass or more and 10 parts by mass or less with respect to 100 parts by mass of the thermoplastic resin.

The fusion-bondability improving layer of the expanded beads may be in a foamed state or in a non-foamed state but is preferably in a substantially non-foamed state. The "substantially non-foamed" state includes a state in which the fusion-bondability improving layer is not foamed and cells are not contained and a state in which cells disappear after expanded, and the "substantially non-foamed" state means that there is almost no cell structure. The thickness of the fusion-bondability improving layer is, for example, 0.5 $\mu$m or more and 100 $\mu$m or less. An intermediate layer may be further provided between the foamed layer and the fusion-bondability improving layer.

The mass ratio (ratio of mass%) of the resin constituting the foamed layer to the resin constituting the fusion-bondability improving layer is preferably foamed layer : fusion-bondability improving layer = 99.5 : 0.5 to 80 : 20, more preferably 99 : 1 to 85 : 15, still more preferably 97 : 3 to 88 : 12 from the viewpoint of enhancing the moldability while maintaining the rigidity of the molded article.

In the case where the thermoplastic resin constituting the foamed layer is a crystalline thermoplastic resin, the expanded beads each preferably have a crystal structure in which an endothermic peak due to melting inherent to the crystalline thermoplastic resin constituting the foamed layer and one or more melting peaks located on a higher temperature side than the endothermic peak appear in a DSC curve obtained when the expanded beads are heated from 23°C to 200°C at a heating rate of 10°C/min. The expanded beads having such a crystal structure have excellent mechanical strength and excellent moldability. Hereinafter, an endothermic peak due to melting inherent to the crystalline thermoplastic resin appearing in the DSC curve is referred to as a "resin intrinsic peak", and a melting peak appearing on a higher temperature side than the resin intrinsic peak is referred to as a "high-temperature peak". The resin intrinsic peak is generated by endotherm when the crystal originally possessed by the crystalline thermoplastic resin constituting the foamed layer melts. On the other hand, it is presumed that the high-temperature peak is caused by melting of secondary crystals formed in the crystalline thermoplastic resin constituting the foamed layer during the process of producing the expanded beads. That is, in the case where the high-temperature peak appears in the DSC curve, it is presumed that secondary crystals are formed in the crystalline thermoplastic resin.

It is sufficient that whether the expanded beads have the above-described crystal structure is determined on the basis of a DSC curve obtained by performing differential scanning calorimetry (that is, DSC) under the above-described conditions in accordance with JIS K 7121:1987. In performing DSC, 1 to 3 mg of expanded beads can be used as a sample.

Specifically, in the DSC curve obtained when heating from 23°C to 200°C (that is, first heating) is performed at a heating rate of 10°C/min as described above, both the high-temperature peak and the resin intrinsic peak of the crystalline thermoplastic resin constituting the foamed layer appear. In the DSC curve obtained when the first heating is performed, the resin intrinsic peak appears in addition to the high-temperature peak. On the other hand, in the DSC curve obtained by performing the first heating, then cooling from 200°C to 23°C at a cooling rate of 10°C/min, and then heating from 23°C to 200°C again at a heating rate of 10°C/min (that is, second heating), only the resin intrinsic peak of the crystalline thermoplastic resin constituting the foamed layer is observed. Therefore, by comparing the DSC curve obtained at the time of the first heating with the DSC curve obtained at the time of the second heating, the resin intrinsic peak and the high-temperature peak can be distinguished. The temperature at the peak of the resin intrinsic peak may be slightly different between the first heating and the second heating, but the difference is usually within 5°C.

The heat of fusion of the high-temperature peak of the expanded beads is preferably 5 J/g or more and 40 J/g or less, more preferably 7 J/g or more and 30 J/g or less, still more preferably 10 J/g or more and 20 J/g or less from the viewpoint of further improving the moldability of the expanded beads and obtaining a molded article having more excellent rigidity.

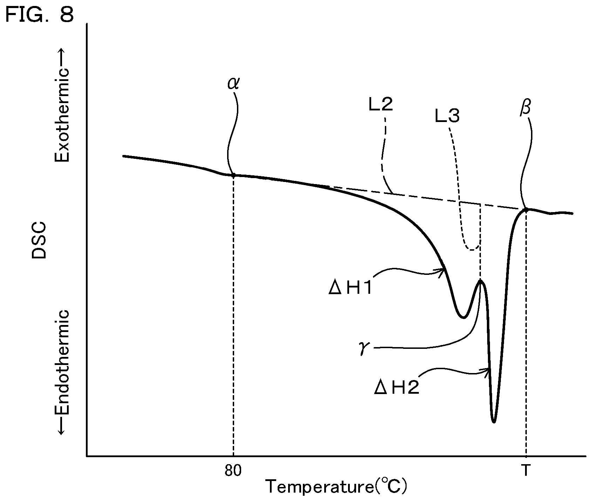

The heat of fusion of the high-temperature peak described above is a value determined as follows. First, 1 to 3 mg of the expanded beads subjected to the conditioning is used as a sample, and differential scanning calorimetry is performed under the condition of heating from 23°C to 200°C at a heating rate of 10°C/min to obtain a DSC curve. Fig. 8 shows an example of the DSC curve. In the case where the expanded beads have a high-temperature peak, in the DSC curve, a resin intrinsic peak $\Delta H1$ and a high-temperature peak $\Delta H2$ having a peak on a higher temperature side than the peak of the resin intrinsic peak ∆H1 appear as shown in Fig. 8.

Next, a straight line L2 connecting a point α corresponding to 80°C and a point β corresponding to a melting end temperature T of the expanded beads on the DSC curve was drawn. The melting end temperature T is an end point on the high-temperature side of the high-temperature peak ∆H2, that is, an intersection of the high-temperature peak ∆H2 and the baseline on the higher temperature side than the high-temperature peak ∆H2 on the DSC curve.

After the straight line L2 is drawn, a straight line L3 passing through a maximum point γ existing between the resin intrinsic peak ∆H1 and the high-temperature peak ∆H2 and parallel to the vertical axis of the graph is drawn. The straight line L3 divides the resin intrinsic peak ∆H1 and the high-temperature peak ∆H2. The endothermic amount of the high-temperature peak ∆H2 can be calculated on the basis of the area of the portion surrounded by the portion of the DSC curve constituting the high-temperature peak ∆H2, the straight line L2, and the straight line L3.

(Method for Producing Expanded Beads)

The expanded beads can be produced, for example, by a method in which thermoplastic resin particles (hereinafter referred to as "resin particles") containing a thermoplastic resin as a base resin are dispersed in a dispersion medium, the resin particles are impregnated with a blowing agent, and then the resin particles containing the blowing agent are released together with the dispersion medium under low pressure. Such an expansion method is sometimes referred to as a "direct expanding method".

The resin particles can be prepared by, for example, a strand cutting method. In the strand cutting method, first, a thermoplastic resin as a base resin of the foamed layer and an additive such as a cell nucleating agent supplied as necessary are supplied into an extruder, heated, and kneaded to provide a resin melt-kneaded product. Thereafter, the resin melt-kneaded product is extruded from a small hole of a die attached to the tip of the extruder to form an extrudate. After the extrudate is cooled, the extrudate is cut to a desired length to provide resin particles having a single layer structure composed of a core layer containing a thermoplastic resin as a base resin.

In order to obtain expanded beads having a multilayer structure including a foamed layer and a fusion-bondability improving layer, it is sufficient to prepare resin particles each having a multilayer structure with a coextrusion apparatus including an extruder for forming the core layer, an extruder for forming the fusion-bondability improving layer, and a coextrusion die connected to these two extruders. In this case, in the extruder for forming the core layer, the first thermoplastic resin to be the base resin of the foamed layer and an additive or the like added as necessary are melt-kneaded to prepare a resin melt-kneaded product for forming the core layer. In the extruder for forming the fusion-bondability improving layer, the second thermoplastic resin to be the base resin of the fusion-bondability improving layer and an additive or the like added as necessary are melt-kneaded to prepare a resin melt-kneaded product for forming the fusion-bondability improving layer.

These resin melt-kneaded products are co-extruded and joined in the die to form a composite having a multilayer structure including a columnar core layer in a non-foamed state and a fusion-bondability improving layer in a non-foamed state covering an outer peripheral surface of the core layer. The composite is extruded through a small hole of the die to form an extrudate. After the extrudate is cooled, the extrudate is cut to a desired length to provide resin particles having a multilayer structure. It is noted that the method for producing the resin particles is not limited to the method described above, and a hot cutting method, an underwater cutting method, or the like may be employed.

In the direct expanding method, the resin particles are expanded while substantially maintaining the shape of the resin particles. Therefore, the shape of the expanded beads obtained by the direct expanding method is substantially a shape obtained by enlarging the shape of the resin particles. Therefore, in order to obtain tubular expanded beads each having a through-hole, it is sufficient to expand tubular resin particles each having a through-hole. Such resin particles can be produced, for example, by using a die having an annular small hole corresponding to the shape of the cut surface of the desired resin particle in the strand cutting method.

Similarly, in order to obtain expanded beads having a cross shape in a cross section at the cut surface, it is sufficient that columnar resin particles having a cross shape in a cross section at the cut surface is expanded. Such resin particles can be produced, for example, by using a die having a small hole having a cross shape corresponding to the shape of the cut surface of the desired resin particle in the strand cutting method.

In preparing the resin particles, it is preferable to adopt the strand cutting method in which a tubular extrudate is cooled in water and then cut. In this case, the accuracy of the shape of the resin particles can be further improved, and the shape of the defective portion in the finally obtained expanded beads can be more easily formed into a desired shape.

The particle diameter of the resin particles is preferably 0.1 mm or more and 3.0 mm or less, more preferably 0.3 mm or more and 1.5 mm or less. The ratio of the length to the outer diameter of the resin particles is preferably 0.5 or more and 5.0 or less, more preferably 1.0 or more and 3.0 or less.

The average mass per resin particle is preferably 0.1 mg or more and 20 mg or less, more preferably 0.2 mg or more and 10 mg or less, still more preferably 0.3 mg or more and 5 mg or less, particularly preferably 0.4 mg or more and 2 mg or less. The average mass per resin particle is a value obtained by dividing the mass of randomly selected 200 resin particles by the number of resin particles.

When the resin particles have a core layer and a fusion-bondability improving layer, the mass ratio between the core layer and the fusion-bondability improving layer is preferably core layer : fusion-bondability improving layer = 99.5 : 0.5 to 85 : 15, more preferably 99 : 1 to 92 : 8, still more preferably 97 : 3 to 90 : 10.

In the expanded beads having through holes, by adjusting the average hole diameter dr of the through holes in the core layer in the resin particles, the average hole diameter d of the through holes of the foamed layer can be adjusted to the above specific range. More specifically, by setting the average hole diameter dr of the through holes of the resin particles to 0.10 mm or more and less than 0.25 mm, preferably 0.12 mm or more and less than 0.24 mm, more preferably 0.15 mm or more and less than 0.22 mm, expanded beads having an average hole diameter d of the through holes of 0.1 mm or more and less than 1 mm can be easily produced. The average hole diameter dr of the through holes of the core layer of the resin particles can be adjusted with, for example, the hole diameter (that is, the inner diameter of a die) of a small hole of a die for forming the through hole.

In addition, by adjusting the particle diameter and average mass of the resin particles, the average outer diameter of the expanded beads can be adjusted to the above range. More specifically, by setting the ratio dr/Dr of the average hole diameter dr of the through holes to the average outer diameter Dr of the resin particles to 0.4 or less, preferably 0.3 or less, more preferably 0.25 or less, still more preferably 0.2 or less, expanded beads in which the ratio d/D of the average hole diameter d of the through holes to the average outer diameter D of the expanded beads is 0.4 or less can be easily produced. From the viewpoint of production stability of the resin particles, the average hole diameter dr of the through holes of the resin particles is preferably 0.1 mm or more, and the ratio dr/Dr of the average hole diameter dr of the through holes to the average outer diameter Dr of the resin particles is preferably 0.1 or more.

The method for calculating the average hole diameter dr of the through holes of the resin particles and the average outer diameter Dr of the resin particles is the same as the method for calculating the average hole diameter d of the through holes of the expanded beads and the average outer diameter D of the expanded beads described above except that the resin particles are used instead of the expanded beads.

It is noted that when the strand cutting method, that is, a method in which a tubular extrudate extruded from a die is cooled in water while being taken up and then cut to an appropriate length is adopted for cutting the extrudate, the particle diameter, the length/outer diameter ratio, and the average mass of the resin particles can be adjusted by performing cutting while appropriately changing the extrusion speed, the take-up speed, the cutter speed, and the like during extrusion of the resin melt-kneaded product.

After preparing the resin particles as described above, the resin particles are dispersed in a dispersion medium. The operation of dispersing the resin particles in the dispersion medium may be performed in a sealed container used in an expanding step described later or may be performed in a container different from the sealed container used in the expanding step. From the viewpoint of simplification of the production process, it is preferable to perform the dispersion step in a sealed container used in the expanding step.

As the dispersion medium, an aqueous dispersion medium containing water as a main component is used. In addition to water, the aqueous dispersion medium may contain a hydrophilic organic solvent such as ethylene glycol, glycerin, methanol, or ethanol. The ratio of water in the aqueous dispersion medium is preferably 60 mass% or more, more preferably 70 mass% or more, still more preferably 80 mass% or more.

It is preferable to add a dispersant to the dispersion medium. By adding the dispersant to the dispersion medium, adhesion between the resin particles heated in the container can be avoided in the expanding step. The addition amount of the dispersant is preferably 0.001 parts by mass or more and 5 parts by mass or less per 100 parts by mass of the resin particles. As the dispersant, an organic dispersant or an inorganic dispersant can be used, but it is preferable to use a fine inorganic substance as the dispersant from the viewpoint of ease of handling. More specifically, as the dispersant, for example, clay minerals such as amsnite, kaolin, mica, or clay, aluminum oxide, titanium oxide, basic magnesium carbonate, basic zinc carbonate, calcium carbonate, iron oxide, or the like can be used. These dispersants may be used alone, or two or more kinds of dispersants may be used in combination. Among them, a clay mineral is preferably used as the dispersant. The clay mineral may be natural or synthetic.

In the case where a dispersant is used, an anionic surfactant such as sodium dodecylbenzenesulfonate, a sodium alkylbenzenesulfonate, sodium lauryl sulfate, or sodium oleate is preferably used in combination as a dispersing aid. The addition amount of the dispersing aid is preferably 0.001 parts by mass or more and 1 part by mass or less per 100 parts by mass of the resin particles.

After the resin particles are dispersed in the dispersion medium, the resin particles are impregnated with a blowing agent in a sealed container. The blowing agent to be impregnated into the resin particles is preferably a physical blowing agent. Examples of the physical blowing agent include inorganic physical blowing agents such as carbon dioxide, air, nitrogen, helium, and argon and organic physical blowing agents such as aliphatic hydrocarbons including propane, butane, hexane and the like, cyclic aliphatic hydrocarbons including cyclopentane, cyclohexane and the like, and halogenated hydrocarbons including chlorofluoromethane, trifluoromethane, 1,1-difluoromethane, 1-chloro-1,1-dichloroethane, 1,2,2,2-tetrafluoroethane, methyl chloride, ethyl chloride, methylene chloride and the like. These physical blowing agents may be used alone, or two or more kinds of physical blowing agents may be used in combination. In addition, the inorganic physical blowing agent and the organic physical blowing agent may be mixed and used. From the viewpoint of environmental load and handleability, an inorganic physical blowing agent is preferably used, and carbon dioxide is more preferably used.

The addition amount of the blowing agent with respect to 100 parts by mass of the resin particles is preferably 0.1 parts by mass or more and 30 parts by mass or less, more preferably 0.5 parts by mass or more and 15 parts by mass or less.

As a method for impregnating the resin particles with the blowing agent in the production process of the expanded beads, a method can be adopted in which the blowing agent is supplied into a sealed container, and the pressure in the sealed container is increased to impregnate the resin particles in the dispersion medium with the blowing agent. In this method, by heating the resin particles together with the dispersion medium, impregnation of the resin particles with the blowing agent can be further promoted.

The pressure inside the sealed container during expansion is preferably kept to be 0.5 MPa (G) or more in terms of gauge pressure. On the other hand, the pressure inside the sealed container is preferably 4.0 MPa (G) or less in terms of gauge pressure. Within the above range, expanded beads can be produced safely without the risk of breakage, explosion, or the like of the sealed container.

In the case where the dispersion medium is heated, the temperature of the dispersion medium is raised at 1 to 5°C/min, so that the temperature at the time of expansion can also be in an appropriate range.

After the impregnation of the resin particles with the blowing agent is completed, the contents of the sealed container are released to a lower pressure environment than in the sealed container. As a result, the core layer of the resin particles is foamed to form a cell structure, and the cell structure is stabilized by being cooled by the outside air to provide expanded beads.

In the case where the base resin of the core layer is a crystalline thermoplastic resin, it is preferable to perform heating and expansion in the following manner when impregnating with the blowing agent. That is, first, a first holding step of holding at a temperature of (the melting point of the crystalline thermoplastic resin - 20°C) or higher and lower than (the melting end temperature of the crystalline thermoplastic resin) for a sufficient time, preferably about 10 to 60 minutes, is performed, and then the temperature is adjusted to a temperature of (the melting point of the crystalline thermoplastic resin - 15°C) to lower than (the melting end temperature of the crystalline thermoplastic resin + 10°C). Then, if necessary, a second holding step of further holding at that temperature for a sufficient time, preferably about 10 to 60 minutes, is performed. Thereafter, it is preferable that the contents of the sealed container be released to the outside in a state where the temperature in the sealed container is set to (the melting point of the crystalline thermoplastic resin - 10°C) or higher to expand the resin particles. The temperature in the sealed container during expansion is more preferably (the melting point of the crystalline thermoplastic resin) or higher and (the melting point of the crystalline thermoplastic resin + 20°C) or lower. By heating and expanding the resin particles in this manner, secondary crystals are formed in the crystalline thermoplastic resin constituting the foamed layer, and expanded beads having excellent mechanical strength and excellent moldability can be easily obtained.

In the preparation of the molded article, the expanded beads obtained as described above may be used as they are. In addition, the expanded beads obtained by the direct expanding method described above can be further expanded, and the resulting expanded beads having an increased bulk ratio can be used to prepare a molded article. In the case where the resin particles are expanded in two stages as described above, the expanding step of the first stage is referred to as a first expanding step, and the expanded beads obtained by the first expanding step are referred to as first-step expanded beads. The expanding step of the second stage is referred to as a second expanding step. The expanded beads obtained through the second expanding step are sometimes referred to as second-step expanded beads.

A method for increasing the bulk ratio of the expanded beads by second expansion is, for example, as follows. First, as the first expanding step, the resin particles are expanded by the direct expanding method described above to obtain first-step expanded beads. Thereafter, an internal pressure is applied to the first-step expanded beads. More specifically, the first-step expanded beads are placed in a pressure-resistant container, and then the inside of the pressure-resistant container is pressurized with an inorganic gas such as air and carbon dioxide to impregnate the expanded beads with the inorganic gas. As a result, the pressure in the cells of the first-step expanded beads is made equal to or higher than the atmospheric pressure. Thereafter, the first-step expanded beads taken out from the pressure-resistant container are heated using a heating medium such as steam and heated air under an environment of a pressure lower than the pressure in the cells to further expand the first-step expanded beads.

Examples

Examples of the expanded beads, the molded article of expanded beads, and the method for producing the same will be described.

(Thermoplastic Resin)

Table 1 shows properties and the like of the polypropylene-based resin and the polyamide-based resin as the thermoplastic resins used in the production of the expanded beads. An ethylene-propylene copolymer and an ethylene-propylene-butene copolymer used in the present example were both random copolymers. The density of PP1 shown in Table 1 is 900 kg/m³. The density of PA1 shown in Table 1 is 1120 kg/m³. PA1 is UBE Nylon 6434B (product name) manufactured by Ube Industries Ltd.

[Table 1]

(Table 1)

| Symbol | Material | Catalyst | Comonomer | Flexural modulus (MPa) | Melting point (°C) | MFR (g/10min) |
|---|---|---|---|---|---|---|
| PP1 | Ethylene-propylene random copolymer | Ziegler-Natta | 3.1 mass% of ethylene | 980 | 142 | 8 |
| PP2 | Ethylene-propylene-butene random copolymer | Ziegler-Natta | 3.1 mass% of ethylene, 3.8 mass% of butene | 650 | 133 | 6 |
| PA1 | Nylon 6/66/12 random copolymer | Unknown | Unmeasured | 1070 | 186 | 3.1 |

<Monomer Component Amount in Polypropylene-Based Resin>

The monomer component amount of the polypropylene-based resin (specifically the ethylene-propylene copolymer and the ethylene-propylene-butene copolymer) was determined by a known method using an IR spectrum. Specifically, determination was performed by the method described in Polymer Analysis Handbook (edited by Research Committee of Polymer Analysis, The Japan Society for Analytical Chemistry, publication date: January 1995, publishing company: Kinokuniya Company Ltd., page numbers and item names: 615 to 616 "II. 2.3 2.3.4 Propylene/ethylene copolymer", 618 to 619 "II. 2.3 2.3.5 Propylene/butene copolymer"), that is, a method of performing quantification using the relationship between the absorbances of ethylene and butene corrected with a predetermined coefficient and the thickness of a film-shaped test piece and the like.

More specifically, first, the polypropylene-based resin was hot-pressed in an environment at 180°C to be formed into a film shape, thereby preparing a plurality of test pieces having different thicknesses. Next, an IR spectrum of each test piece was measured, then absorbances ($A_{722}$ and $A_{733}$) at 722 cm⁻¹ and 733 cm⁻¹ derived from ethylene and an absorbance ($A_{766}$) at 766 cm⁻¹ derived from butene were read from the IR spectrums. Next, for each test piece, the ethylene component amount (unit: mass%) in the polypropylene-based resin was calculated using Formulas (6) to (8) below. The value obtained by arithmetically averaging the ethylene component amounts obtained for the respective test pieces was taken as the ethylene component amount (unit: mass%) in the polypropylene-based resin.

$$(K'_{733})_c = 1/0.96\{(K'_{733})_a - 0.268(K'_{722})_a\} \quad \cdots \quad (6)$$

$$(K'_{722})_c = 1/0.96\{(K'_{722})_a - 0.150(K'_{733})_a\} \quad \cdots \quad (7)$$

$$\text{Ethylene component amount} = 0.575\{(K'_{722})_c + (K'_{733})_c\} \quad \cdots (8)$$

In Formulas (6) to (8), $K'_a$ represents the apparent absorption coefficient at each wave number ($K'_a = A/\rho t$), $K'_c$ represents a corrected absorption coefficient, A represents an absorbance, $\rho$ represents the density of the resin (unit: g/cm³), and t represents the thickness of the film-shaped test piece (unit: cm). It is noted that Formulas (6) to (8) above can be applied to random copolymers.

Also, for each test piece, the butene component amount (unit: mass%) in the polypropylene-based resin was calculated using Formula (9) below. The value obtained by arithmetically averaging the butene component amounts obtained for the respective test pieces was taken as the butene component amount (unit: mass%) in the polypropylene-based resin.

$$\text{Butene component amount} = 12.3\,(A_{766}/L) \qquad \cdots (9)$$

In Formula (9), A represents an absorbance, and L represents the thickness (unit: mm) of the film-shaped test piece.

<Flexural Modulus of Thermoplastic Resin>

The thermoplastic resin was heat-pressed at 230°C to prepare a 4-mm sheet, and a test piece having a length of 80 mm × a width of 10 mm × a thickness of 4 mm was cut out from the sheet. The flexural modulus of this test piece was determined in accordance with JIS K 7171:2008. It is noted that a radius R1 of an indenter and a radius R2 of a support base are both 5 mm, an inter-fulcrum distance is 64 mm, and a test speed is 2 mm/min.

<Melting Point of Thermoplastic Resin>

The melting point of the thermoplastic resin was determined in accordance with JIS K 7121:1987. Specifically, first, the test piece made of the thermoplastic resin was conditioned in accordance with "(2) The case of measurement of melting temperature after a definite heat treatment" described in JIS K 7121:1987. The conditioned test piece was heated from 30°C to 200°C at a heating rate of 10°C/min to obtain a DSC curve. Then, the vertex temperature of the melting peak appearing in the DSC curve was taken as the melting point. As the measuring device, a heat flux differential scanning calorimeter (manufactured by SII NanoTechnology Inc., model number: DSC7020) was used.

<Melt Mass-Flow Rate of Thermoplastic Resin>

The melt mass-flow rate (that is, MFR) of the thermoplastic resin was measured under the conditions of a temperature of 230°C and a load of 2.16 kg in accordance with JIS K 7210-1:2014.

Next, the configuration and production method of the expanded beads used in the present example will be described.

(Expanded Bead A)

As shown in Table 2, an expanded bead A has a multilayer structure including a foamed layer 3, which contains PP1 (see Table 1) as a base resin, and a fusion-bondability improving layer 4, which contains PP2 (see Table 1) as a base resin and covers the foamed layer 3, in a non-foamed state. As shown in Figs. 6 and 7, the expanded bead A has a tubular shape having the through hole 211 as the defective portion 21. The side peripheral surface of the expanded bead A is covered with the fusion-bondability improving layer 4, and the inside of the fusion-bondability improving layer 4 is composed of the foamed layer 3.

In preparing the expanded beads A, first, using a coextrusion apparatus including an extruder for forming the core layer, an extruder for forming the fusion-bondability improving layer, and a coextrusion die connected to these two extruders, the extrudate extruded from the coextrusion apparatus was cut by the strand cutting method to prepare multilayer resin particles having a through hole. Specifically, PP1 shown in Table 1 and the cell adjusting agent were supplied to the extruder for forming the core layer and melt-kneaded at a maximum set temperature of 245°C in the extruder to provide a resin melt-kneaded product for forming the core layer. It is noted that zinc borate was used as the cell adjusting agent, and the addition amount of zinc borate was set to 500 ppm by mass with respect to the polypropylene-based resin.

PP2 shown in Table 1 was melt-kneaded at a maximum set temperature of 245°C in the extruder for forming the fusion-bondability improving layer to provide a resin melt-kneaded product for forming the fusion-bondability improving layer. These resin melt-kneaded products are co-extruded and joined in the die to form a tubular composite including a tubular core layer in a non-foamed state and a fusion-bondability improving layer, which covers an outer peripheral surface of the tubular core layer, in a non-foamed state. After the composite was extruded from the die having a small hole for forming the through hole in the core layer, the extrudate was cooled with cold water at a water temperature of 10°C while being taken up and cut to an appropriate length using a pelletizer to provide multilayer resin particles including a tubular core layer having a through hole and a fusion-bondability improving layer covering the core layer. The mass ratio of the core layer and the fusion-bondability improving layer in the multilayer resin particles was set to core layer : fusion-bondability improving layer = 95 : 5 (that is, the mass ratio of the fusion-bondability improving layer is 5%). The mass per multilayer resin particle was set to about 1.5 mg.

Next, the multilayer resin particles were expanded by the direct expanding method to provide the expanded beads A. Specifically, 1 kg of the multilayer resin particles was put into a 5 L sealed container together with 3 L of water as a dispersion medium. Next, 0.3 parts by mass of a dispersant and 0.004 parts by mass of a dispersing aid with respect to 100 parts by mass of the multilayer resin particles were added in the sealed container, and the multilayer resin particles were dispersed in the dispersion medium. Kaolin was used as the dispersant. A surfactant (sodium alkylbenzenesulfonate) was used as the dispersing aid.

Thereafter, carbon dioxide as a physical blowing agent was supplied into the sealed container while stirring the inside of the sealed container, and the temperature in the container was raised to 147.0°C. The pressure inside the container (that is, the impregnation pressure or the carbon dioxide pressure) at this time was 3.7 MPa (G) in terms of gauge pressure. After the temperature in the container reached 147.0°C, the multilayer resin particles were impregnated with the physical blowing agent by maintaining this temperature for 15 minutes. After the impregnation of the physical blowing agent was completed, the sealed container was opened, and the contents were released to atmospheric pressure to expand the multilayer resin particles. As described above, the expanded beads A including the foamed layer formed by expanding the core layer and the fusion-bondability improving layer in a non-foamed state covering the foamed layer were obtained.

(Expanded Bead B)

As shown in Table 2, an expanded bead B has a single-layer structure composed of the foamed layer 3 containing PP1 (see Table 1) as a base resin. That is, the expanded bead B do not include the fusion-bondability improving layer. As shown in Figs. 2 and 3, the expanded bead B has a tubular shape having the through hole 211 as the defective portion 21. The method for producing the expanded beads B is the same as the method for producing the expanded beads A except that the fusion-bondability improving layer 4 is not provided in the process of preparing the resin particles.

(Expanded Bead C)

An expanded bead C has a circular columnar shape having neither through hole nor groove on the side peripheral surface. That is, the expanded bead C does not have the defective portion. In the preparation of the expanded beads C, first, circular columnar resin particles (see Table 2), which included a core layer containing PP1 as a base resin and a fusion-bondability improving layer containing PP2 as a base resin and did not have a defective portion, were prepared. First-step expanded beads were produced by expanding the resin particles under the same conditions as for the expanded beads A except that the temperature in the container was changed to 150.1°C and the gauge pressure was changed to 2.6 MPa (G). Next, the first-step expanded beads were placed in the pressure-resistant container and the inside of the pressure-resistant container was pressurized with air to impregnate the cells with the air, so that the internal pressure of the cells of the first-step expanded beads was increased. Thereafter, the first-step expanded beads were taken out from the pressure-resistant container and heated under atmospheric pressure by applying steam to the expanded beads, thereby providing the expanded beads C having a bulk density described in Table 2.

(Expanded Bead D)

An expanded bead D has a tubular shape having a through hole as a defective portion of which the average hole diameter is larger than that of the expanded bead A. In preparing the expanded beads D, first, tubular resin particles (see Table 2) including a core layer containing PP1 as a base resin and a fusion-bondability improving layer containing PP2 as a base resin were prepared using a coextrusion die having a different inner diameter of the small hole of the die for forming the through hole in the core layer from the coextrusion die used for preparing the expanded beads A. The expanded beads D were obtained by expanding the resin particles under the same conditions as for the expanded beads A except that the temperature in the container was changed to 146.4°C and the gauge pressure was changed to 3.5 MPa (G).

(Expanded Bead E)

As shown in Table 2, an expanded bead E has a single-layer structure composed of the foamed layer 3 containing PA1 (see Table 1) as a base resin. As shown in Figs. 2 and 3, the expanded bead E has a tubular shape having the through hole 211 as the defective portion 21.

In preparing the expanded beads E, first, the extrudate extruded from an extrusion apparatus equipped with an extruder for forming the core layer was cut by the strand cutting method to prepare resin particles. Specifically, PA1 shown in Table 1 and a cell adjusting agent were supplied to the extruder for forming the core layer and melt-kneaded at a maximum set temperature of 260°C in the extruder to provide a resin melt-kneaded product for forming the core layer. After the melt-kneaded product was extruded from the die having a small hole for forming the through hole in the core layer, the extrudate was cooled with cold water at a water temperature of 10°C while being taken up and cut to an appropriate length using a pelletizer to provide resin particles including a tubular core layer having a through hole. Talc was used as the cell adjusting agent, and the addition amount of talc was set to 3000 ppm by mass with respect to the polyamide-based resin. The mass per resin particle was set to about 1.5 mg.

Next, the resin particles were expanded by the direct expanding method to provide the expanded beads E. Specifically, 1 kg of the resin particles was put into a 5 L sealed container together with 3 L of water as a dispersion medium. Next, 0.3 parts by mass of a dispersant and 0.004 parts by mass of a dispersing aid with respect to 100 parts by mass of the resin particles were added in the sealed container, and the resin particles were dispersed in the dispersion medium. Kaolin was used as the dispersant. A surfactant (sodium alkylbenzenesulfonate) was used as the dispersing aid.

Thereafter, carbon dioxide as a physical blowing agent was supplied into the sealed container while stirring the inside of the sealed container, and the temperature in the container was raised to 131.0°C. The pressure inside the container (that is, the impregnation pressure or the carbon dioxide pressure) at this time was 4.0 MPa (G) in terms of gauge pressure. After the temperature in the container reached 131.0°C, the resin particles were impregnated with the physical blowing agent by maintaining this temperature for 15 minutes. After the impregnation of the physical blowing agent was completed, the sealed container was opened, and the contents were released to atmospheric pressure to expand the resin particles. As described above, the expanded beads E having a foamed layer formed by expanding the core layer were obtained.

(Expanded Bead F)

An expanded bead F has a circular columnar shape having neither through hole nor groove on the side peripheral surface. That is, the expanded bead F has no defective portion. The method for producing the expanded beads F is the same as the method for producing the expanded beads E except that the defective portion is not provided in the process of preparing the resin particles.

Next, molded articles were prepared by the following method using the above-mentioned expanded beads A to F.

(Examples 1 to 5 and Comparative Examples 1 to 4)

First, the expanded beads shown in Tables 3 and 4 were dried at 23°C for 24 hours and then impregnated with air to increase the internal pressures, that is, the pressures in the cells to the values shown in the "bead internal pressure" sections of Tables 3 and 4. In Example 4 and Comparative Example 2, since no internal pressure was applied to the expanded beads, the symbol "-" was recorded in the "bead internal pressure" sections. The internal pressure of the expanded beads is a value measured as follows. A mass Q (unit: g) of the expanded beads in a state where the internal pressure was increased immediately before filling into the mold and a mass U (unit: g) of the expanded beads after a lapse of 48 hours were measured, and the difference between the masses Q and U was taken as an increased air amount W (unit: g). Using these values, the internal pressure (unit: MPa (G)) of the expanded beads was calculated on the basis of Formula (10) below.

$$P = (W/M) \times R \times T/V \qquad \cdots (10)$$

In Formula (10) above, M represents a molecular weight of air, R represents the gas constant, T represents an absolute temperature, and V represents a volume (unit: L) obtained by subtracting the volume of the base resin in the expanded beads from the apparent volume of the expanded beads. In the present example, M, R, and T were set to M = 28.8 (g/mol), R = 0.0083 (MPa·L/(K·mol)), and T = 296 (K).

Next, the mold was filled with the expanded beads by the cracking filling method (cracking filling step). As illustrated in Fig. 1, the mold 1 used in the present example includes the fixed mold 11 and the movable mold 13 configured to be able to move reciprocally in one direction with respect to the fixed mold 11. In addition, the mold 1 is configured such that the molding cavity 12 can be formed between the fixed mold 11 and the movable mold 13. The molding cavity 12 in the mold of the present example is configured to be able to mold a rectangular parallelepiped molded article having outer dimensions of 300 mm in length × 250 mm in width × 20 mm in thickness and is arranged such that the thickness direction of the molded article lies along the opening/closing direction of the mold 1. The average length $L_A$ of the molding cavity in the opening/closing direction represented by Formula (2) below is as shown in Tables 3 and 4.

$$L_A = V/S \qquad \cdots (2)$$

In Formula (2) above, V represents the capacity (unit: mm³) of the molding cavity represents a state where the mold is completely closed, and S represents the projected area (unit: mm²) when the molding cavity is projected in the opening/closing direction of the mold.

In the cracking filling step, as shown in Fig. 1, the expanded beads 2 were supplied from a hopper 14 to the mold 1 in a state where the mold was opened such that the dimension δ (unit: mm) of the cracking gap, that is, the distance in the opening/closing direction from the fixed mold 11 to the movable mold 13 at the time of filling the expanded beads, was set to a value shown in Tables 3 and 4. After the filling of the expanded beads 2 into the molding cavity 12 was completed with the cracking gap formed between the fixed mold 11 and the movable mold 13, the mold 1 was completely closed as shown in Fig. 3 to mechanically compress the expanded beads 2. The filling rate F and the maximum value $P_{max}$ of the compression rate of the expanded beads at this time are shown in Tables 3 and 4. The filling rate F and the maximum value $P_{max}$ of the compression rate of the expanded beads are calculated by Formulas (1) and (3) below.

$$F = \{a/(b \times c)\} \times 100 \qquad \cdots \ (1)$$

$$P_{max} = (\delta/L_{min}) \times 100 \qquad \cdots \ (3)$$

In Formula (1) above, a represents the mass (unit: kg) of the expanded beads filled in the mold, b represents the bulk density (unit: $kg/m^3$) of the expanded beads, and c represents the capacity (unit: $m^3$) of the molding cavity. In Formula (3) above, $L_{min}$ represents the minimum value (unit: mm) of the length of the molding cavity in the opening/closing direction in a state where the mold is completely closed. The mold used in the present example is configured to be capable of molding a rectangular parallelepiped molded article and is disposed such that the thickness direction of the molded article lies along the opening/closing direction of the mold 1. Therefore, the minimum value $L_{min}$ of the length of the molding cavity in the opening/closing direction is equal to the inner dimension of the molding cavity in the thickness direction of the molded article, that is, the thickness of the obtained molded article.

After the mold was completely closed, an exhaust step of supplying steam from both surfaces of the mold for 5 seconds to preheat the mold was performed. Thereafter, steam was supplied from one surface side of the mold until a molding pressure reached a pressure lower than a molding pressure at the time of main heating shown in Tables 3 and 4 by 0.08 MPa (G) to perform one-side heating. Next, steam was supplied from the other surface side of the mold until a molding pressure reached a pressure lower than a molding pressure at the time of main heating by 0.04 MPa (G) to perform one-side heating. Thereafter, steam was supplied from both surfaces of the mold to perform main heating until the molding pressure shown in Tables 3 and 4 was reached. After completion of the main heating, the pressure in the mold was released, and the molded article was cooled in the mold until the surface pressure due to the expansion force of the molded article reached 0.04 MPa (G). Thereafter, the molded article was taken out from the mold. The molded article after demolding was allowed to stand in an oven at 80°C for 12 hours to perform the aging step. After the aging step, the molded article was conditioned by allowing the molded article to stand for 24 hours under conditions of a relative humidity of 50%, 23°C, and 1 atm. The molded article thus obtained was subjected to evaluation of a molded article described later.

(Example 6 and Comparative Example 5)

In Example 6 and Comparative Example 5, molded articles were prepared in the same manner as in Example 1 except that expanded beads shown in Tables 3 and 4 were used, and a mold 1 configured to be able to mold a rectangular parallelepiped molded article having outer dimensions of 300 mm in length × 250 mm in width × 60 mm in thickness was used.

(Example 7 and Comparative Example 6)

In Example 7 and Comparative Example 6, molded articles were prepared in the same manner as in Example 1 except that polyamide-based resin expanded beads were used as shown in Tables 3 and 4, and the outer dimensions of the molding cavity in the mold was changed to 300 mm in length × 250 mm in width × 40 mm in thickness.

Various properties of the expanded beads and the molded articles in the examples and comparative examples are shown in Tables 2 to 4. Evaluation methods of various properties shown in Tables 2 to 4 are as follows. In the molded article of Comparative Example 4, since the expanded beads were not fusion-bonded and a molded article having a desired shape could not be obtained, evaluation other than the fusion-bonding rate was not performed. Therefore, a symbol "-" indicating that evaluation was not performed was recorded in the section of each evaluation item in Comparative Example 4. In addition, since Comparative Examples 1 and 2 and Comparative Examples 5 and 6 were inferior in productivity, evaluation of dimensional stability in the case of omitting the aging step was not performed. Therefore, a symbol "-" indicating that evaluation was not performed was recorded in the sections of dimensional stability in Comparative Examples 1 and 2 and Comparative Examples 5 and 6.

(Evaluation of Expanded Beads)

The measurement of physical properties and evaluation of the expanded beads were performed using the expanded beads conditioned by allowing the expanded beads to stand for 24 hours under the conditions of a relative humidity of 50%, 23°C, and 1 atm.

<Bulk Density>

The conditioned expanded beads were filled in a measuring cylinder so as to be naturally deposited, and the bulk volume (unit: L) of the expanded beads was read on the scale of the measuring cylinder. Thereafter, the bulk density (unit: $kg/m^3$) of the expanded beads was calculated by dividing the mass (unit: g) of the expanded beads in the measuring cylinder by the above-described bulk volume and then subjecting the result to unit conversion.

<Apparent Density>

The mass of the conditioned expanded beads was measured, and then the expanded beads were immersed in ethanol having a temperature of 23°C contained in a measuring cylinder with a wire mesh. Then, in consideration of the volume of the wire mesh, the volume of the expanded beads read from the liquid level rise was measured. The apparent density (unit: $kg/m^3$) of the expanded beads was calculated by dividing the mass (unit: g) of the expanded beads thus obtained by the volume (unit: L) and then performing unit conversion. The ratio of the apparent density to the bulk density obtained by the above-mentioned method is shown in the "apparent density/bulk density" section in Table 2.

- Average Hole Diameter d of Through Holes

The average hole diameter d of the through holes of the expanded beads was determined as follows. First, the expanded beads were conditioned by allowing expanded beads to stand for 24 hours or longer in an environment of a relative humidity of 50%, a temperature of 23°C, and an atmospheric pressure of 1 atm. One hundred expanded beads randomly selected from the conditioned expanded beads were each cut at the center in an axial direction thereof along a plane perpendicular to the axial direction to expose the cut surface. The cut surface of each expanded bead was photographed, and the cross-sectional area (opening area) of the through hole portion in the cross-sectional photograph was determined. The diameter of a virtual perfect circle having the same area as the cross-sectional area was calculated, and the arithmetic average thereof was taken as the average hole diameter d (unit: mm) of the through holes of the expanded beads.

- Average Outer Diameter D of Expanded Beads

The average outer diameter of the expanded beads was determined as follows. First, the expanded beads were conditioned by allowing expanded beads to stand for 24 hours or longer in an environment of a relative humidity of 50%, a temperature of 23°C, and an atmospheric pressure of 1 atm. One hundred expanded beads randomly selected from the conditioned expanded beads were each cut at the center in the axial direction along a plane perpendicular to the axial direction to expose the cut surface. The cut surface of each expanded bead was photographed to determine the cross-sectional area (including the opening of the through hole) of the expanded bead. The diameter of a virtual perfect circle having the same area as the cross-sectional area was calculated, and the arithmetic average thereof was taken as the average outer diameter D (unit: mm) of the expanded beads. In Table 2, the value of the ratio d/D of the average hole diameter d of the through holes to the average outer diameter D of the expanded beads is also shown.

- Average Wall Thickness t of Expanded Beads

The average wall thickness t (unit: mm) of the expanded beads was calculated on the basis of Formula (5) below using the average outer diameter D (unit: mm) of the expanded beads and the average hole diameter d (unit: mm) of the through holes. In Table 2, the value of the ratio t/D of the average wall thickness t to the average outer diameter D of the expanded beads is also shown.

$$t = (D-d)/2 \qquad \cdots (5)$$

<Total Cross-Sectional Area Ct of Defective Portion and Average Cross-Sectional Area Ca per Defective Portion>

One hundred expanded beads were randomly selected from the conditioned expanded beads, and the expanded beads were each cut at the middle position in the axial direction thereof along a plane perpendicular to the axial direction to expose the cut surface. Next, the cut surface of the expanded bead was photographed, and image analysis was performed to measure the cross-sectional area C (see Figs. 3 and 7) of the through hole of each expanded bead.

The above operation was performed on 100 expanded beads, and the arithmetic average value of the cross-sectional areas of the through holes obtained was taken as the total cross-sectional area Ct of the defective portion(s). It is noted that since the expanded beads A, the expanded beads B, and the expanded beads D have one through hole per expanded bead, the average cross-sectional area Ca per defective portion is equal to the total cross-sectional area Ct of the defective portion. Table 2 shows the ratio Ct/A of the total cross-sectional area Ct of the defective portion(s) to the average cross-sectional area A of the expanded bead in the cut surface, and the ratio Ca/A of the average cross-sectional area Ca per defective portion to the average cross-sectional area A of the expanded bead.

The method for calculating the average cross-sectional area A of the expanded bead described above is as follows. First, an expanded bead was cut at the center in the axial direction thereof along a plane perpendicular to the axial direction to expose the cut surface. The cross-sectional area of the expanded bead 2 at the cut surface was measured. The cross-sectional area of the expanded bead 2 is the sum of the cross-sectional area of the foamed layer 3 and the cross-sectional area of the fusion-bondability improving layer 4 at the cut surface. The cross-sectional area of the expanded bead 2 at the cut surface was measured by taking a photograph of the cut surface of the expanded bead and analyzing the image. The cross-sectional area of the defective portion is not included in the cross-sectional area of the expanded bead. The above operation was performed on 100 expanded beads, and the arithmetic average value of the cross-sectional areas of the expanded beads obtained was taken as the average cross-sectional area A of the expanded bead.

<Productivity Evaluation>

The productivity of the molded article was evaluated on the basis of the cycle time in the internal pressure applying step, the cycle time in the in-mold molding step, and the cycle time in the drying step of drying the molded article after demolding. Specifically, when all of the cycle time in the internal pressure applying step, the cycle time in the in-mold molding step, and the cycle time in the drying step of drying the molded article after demolding determined as follows were good, it was determined that the molded article was excellent in productivity, and "A" was recorded in the "Overall rating" sections of Tables 3 and 4. On the other hand, when any one of the above three ratings was poor, it was determined that the productivity was poor, and "B" was recorded in the "Overall rating" sections of Tables 3 and 4.

- Cycle Time in Internal Pressure Applying Step

When a good molded article could be obtained without applying an internal pressure to the expanded beads or by applying an internal pressure of less than 0.1 MPa (G) to the expanded beads, it was judged that the cycle time in the internal pressure applying step was good, and "Good" was recorded in the "Internal pressure applying cycle" sections of Tables 3 and 4. On the other hand, when a good molded article could not be obtained when the internal pressure applied to the expanded beads was 0.1 MPa (G) or less, it was judged that the cycle time in the internal pressure applying step was long and the productivity was poor, and "Poor" was recorded in the "Internal pressure applying cycle" sections of Tables 3 and 4.

- Cycle Time in In-Mold Molding Step

When the expanded beads were subjected to in-mold molding, the time from the time point of the main heating being completed to the time point of the surface pressure caused by the expansion force of the molded article reaching 0.04 MPa (G) was measured, and this time was defined as the cooling time. In the case where the cooling time was 50 seconds or less, it was judged that the cycle time in the in-mold molding step was good, and "Good" was recorded in the "Molding cycle" sections of Tables 3 and 4. On the other hand, when the cooling time was more than 50 seconds, it was judged that the cycle time in the in-mold molding step was long and the productivity was poor, and "Poor" was recorded in the "Molding cycle" sections of Tables 3 and 4.

- Cycle Time in Drying Step

The molded article released from the mold was dried in an atmosphere at 80°C for 1 hour, and then the water content of the molded article was measured. In the case where the water content of the molded article after drying was 3% or less, it was judged that the cycle time in the drying step was good, and "Good" was recorded in the "Drying cycle" sections of Tables 3 and 4. On the other hand, in the case where the water content of the molded article after drying was more than 3%, it was judged that the cycle time in the drying step was long and the productivity was poor, and "Poor" was recorded in the "Drying cycle" sections of Tables 3 and 4.

(Evaluation of Molded Article)

<Density of Molded Article>

The density (unit: kg/m$^3$) of the molded article was calculated by dividing the mass (unit: g) of the molded article by the volume (unit: L) determined from the outer dimensions of the molded article and performing conversion of the unit.

<Fusion Bondability>

The molded article was bent and broken so as to be substantially equally divided in the longitudinal direction. Thereafter, the fracture surface of the test piece was visually observed, and the number of expanded beads that were broken themselves (material fracture) and the number of expanded beads peeled off at the interfaces of the expanded beads were counted respectively. Then, the ratio of the number of expanded beads broken by material fracture to the total number of expanded beads present on the fracture surface was calculated, and the value expressed as a percentage was taken as the fusion-bonding rate (unit: %) of the molded article. In the "Fusion bondability" sections of Tables 3 and 4, the symbol "A" was recorded when the fusion-bonding rate of the test piece was 90% or more, the symbol "B" was recorded when the fusion-bonding rate was 70% or more and less than 90%, and the symbol "C" was recorded when the fusion-bonding rate was less than 70%.

<Surface Property>

The surface of the molded article was visually observed, and the surface property of the molded article was evaluated in accordance with the following criteria.

A: There are few gaps between beads on the surface of the molded article, and irregularities caused by grooves, through holes, and the like are not conspicuous, indicating a good surface state.
B: Irregularities caused by gaps between beads and/or grooves, through holes, and the like are slightly observed on the surface of the molded article.
C: Irregularities caused by gaps between beads and/or grooves, through holes, and the like are remarkably observed on the surface of the molded article.

<Shape Stability in the Case of Omitting Aging Step>

A molded article not subjected to the aging step after released from the mold was used to evaluate the shape stability. Specifically, the molded article after demolding was conditioned by allowing the molded article to stand for 24 hours under conditions of a relative humidity of 50%, 23°C, and 1 atm. In a plan view of the conditioned molded article viewed from the thickness direction, the thickness of the molded article at each of four positions 10 mm inward from the respective vertices in the center direction and the thickness of the molded article at the central portion were measured. Next, the ratio (unit: %) of the thickness of the thinnest portion to the thickness of the thickest portion among the measured portions was calculated. In the "Shape stability" sections of Tables 3 and 4, when the ratio of the thickness was 95% or more, "Good" was recorded, and when the ratio of the thickness was less than 95%, "Poor" was recorded.

[Table 2]

(Table 2)

|  | Unit | Expanded bead A | Expanded bead B | Expanded bead C | Expanded bead D | Expanded bead E | Expanded bead F |
|---|---|---|---|---|---|---|---|
| Foamed layer | - | PP1 | PP1 | PP1 | PP1 | PA1 | PA1 |

(continued)

| | Unit | Expanded bead A | Expanded bead B | Expanded bead C | Expanded bead D | Expanded bead E | Expanded bead F |
|---|---|---|---|---|---|---|---|
| Fusion-bond-ability improving layer | - | PP2 | Absent | PP2 | PP2 | Absent | Absent |
| Bulk density | kg/m³ | 29.4 | 28.5 | 28.4 | 25.4 | 74.5 | 65.9 |
| Apparent density | kg/m³ | 50.6 | 50.7 | 45.7 | 51.8 | 144.0 | 105.4 |
| Apparent density/bulk density | - | 1.72 | 1.78 | 1.61 | 2.04 | 1.93 | 1.60 |
| Shape of defective portion | - | Through hole | Through hole | Absent | Through hole | Through hole | Absent |
| Average hole diameter d | mm | 0.7 | 0.8 | - | 1.6 | 0.9 | - |
| Average outer diameter D | mm | 3.6 | 3.7 | 3.7 | 3.6 | 2.8 | 2.8 |
| d/D | - | 0.19 | 0.22 | - | 0.44 | 0.35 | - |
| Average wall thickness t | mm | 1.5 | 1.5 | - | 1.0 | 1.0 | - |
| t/D | - | 0.40 | 0.39 | - | 0.28 | 0.34 | - |
| Ca/A | - | 0.04 | 0.05 | - | 0.23 | 0.14 | - |
| Ct/A | - | 0.04 | 0.05 | - | 0.23 | 0.14 | - |

[Table 3]

(Table 3)

| | Unit | Example 1 | Example 2 | Example 3 | Example 4 | Example 5 | Example 6 | Example 7 |
|---|---|---|---|---|---|---|---|---|
| **Molding condition** — Expanded bead | - | Expanded bead A | Expanded bead A | Expanded bead B | Expanded bead A | Expanded bead A | Expanded bead A | Expanded bead E |
| Bead internal pressure | MPa (G) | 0.08 | 0.08 | 0.08 | - | 0.08 | 0.08 | 0.08 |
| Inner dimension of molding cavity in thickness direction | mm | 20 | 20 | 20 | 20 | 20 | 60 | 40 |
| Average length $L_A$ of molding cavity | mm | 20 | 20 | 20 | 20 | 20 | 60 | 40 |
| Dimension $\delta$ of cracking gap | mm | 7 | 10 | 7 | 7 | 15 | 18 | 14 |
| Maximum value $P_{max}$ of Compression rate | % | 35 | 50 | 35 | 35 | 75 | 30 | 35 |
| Filling rate F | % | 135 | 150 | 135 | 135 | 175 | 130 | 135 |
| Molding pressure | MPa (G) | 0.28 | 0.28 | 0.28 | 0.28 | 0.28 | 0.28 | 0.14 |
| **Productivity** — Internal pressure applying cycle | - | Good | Good | Good | Good | Good | Good | Good |
| Molding Cycle | - | Good | Good | Good | Good | Good | Good | Good |
| Drying cycle | - | Good | Good | Good | Good | Good | Good | Good |
| Overall rating | - | A | A | A | A | A | A | A |
| **Molded article** — Density of molded article | kg/m$^3$ | 37 | 41 | 34 | 39 | 47 | 36 | 88 |
| Voidage | % | 7 | 6 | 7 | 7 | 4 | 4 | 8 |
| Fusion bondability | - | A | A | B | A | B | A | A |
| Surface property | - | A | A | A | A | A | A | A |
| Dimensional stability | - | A | A | B | A | A | A | A |

EP 4 461 501 B1

[Table 4]

[Table 4]

(Table 4)

| | | Unit | Comparative Example 1 | Comparative Example 2 | Comparative Example 3 | Comparative Example 4 | Comparative Example 5 | Comparative Example 6 |
|---|---|---|---|---|---|---|---|---|
| | Expanded bead | - | Expanded bead C | Expanded bead D | Expanded bead A | Expanded bead A | Expanded bead C | Expanded bead F |
| Molding condition | Bead internal pressure | MPa (G) | 0.08 | - | 0.08 | 0.08 | 0.08 | 0.08 |
| | Inner dimension of molding cavity in thickness direction | mm | 20 | 20 | 20 | 20 | 60 | 40 |
| | Average length $L_A$ of molding cavity | mm | 20 | 20 | 20 | 20 | 60 | 40 |
| | Dimension δ of cracking gap | mm | 7 | 7 | 3 | 30 | 18 | 14 |
| | Maximum value $P_{max}$ of Compression rate | % | 35 | 35 | 15 | 150 | 30 | 35 |
| | Filling rate F | % | 135 | 135 | 115 | 250 | 130 | 135 |
| | Molding pressure | MPa (G) | 0.28 | 0.25 | 0.28 | 0.28 | 0.28 | 0.14 |
| Productivity | Internal pressure applying cycle | - | Good | Good | Good | - | Good | Good |
| | Molding Cycle | - | Poor | Good | Good | - | Poor | Poor |
| | Drying cycle | - | Good | Poor | Poor | - | Good | Good |
| | Overall rating | - | B | B | B | - | B | B |
| Molded article | Density of molded article | kg/m³ | 37 | 34 | 35 | - | 35 | 78 |
| | Voidage | % | 8 | 19 | 9 | - | 5 | 7 |
| | Fusion bondability | - | B | A | A | - | B | B |
| | Surface property | - | A | C | A | - | A | A |
| | Dimensional stability | - | - | - | A | - | - | - |

As shown in Table 2, the expanded beads A, the expanded beads B, and the expanded beads E used in the examples have the specific shapes described above. Also, as shown in Table 3, in Examples 1 to 7, the expanded beads were subjected to cracking filling so that the filling rate F was within the above-mentioned specific range, and then in-mold molding was performed. Therefore, in Examples 1 to 7, the cycle time in the internal pressure applying step, the cycle time in the in-mold molding step, and the cycle time in the drying step could be shortened, and the productivity of the molded article could be improved. In addition, the molded articles of Examples 1 to 7 had excellent surface properties and fusion bondability, and significant shrinkage and deformation could be avoided even when the aging step was omitted. On the other hand, the expanded beads B having a single layer structure were significantly shrunk or deformed when the aging step was omitted.

On the other hand, as shown in Table 2, the expanded beads C used in Comparative Example 1 are polypropylene-based resin expanded beads having no defective portion as conventionally used. The expanded beads F used in Comparative Example 6 are polyamide-based resin expanded beads having no defective portion as conventionally used. When such expanded beads C and expanded beads F were subjected to in-mold molding after cracking filling so that the filling rate F was within the above-mentioned specific range, the cycle time in the in-mold molding step was increased as shown in Table 4.

As shown in Table 2, in the expanded beads D used in Comparative Example 2, the ratio Ca/A of the average cross-sectional area Ca per defective portion to the average cross-sectional area A of the expanded bead and the ratio Ct/A of the total cross-sectional area Ct of the defective portion(s) to the average cross-sectional area A of the expanded bead are excessively large. When such expanded beads D were subjected to cracking filling and then to in-mold molding, the cycle time in the drying step was increased as shown in Table 4 due to the insufficient secondary expandability of the expanded beads and the large defective portions. In addition, the surface property of the resulting molded article deteriorated.

Comparative Example 3 is an example in which the dimension δ of the cracking gap was narrower and the filling rate F was lower than those in Example 1. As shown in Table 4, when cracking filling and in-mold molding were performed under the conditions of Comparative Example 3, the water content of the molded article released from the mold increased, leading to an increase in the cycle time in the drying step.

Comparative Example 4 is an example in which the dimension δ of the cracking gap was wider and the filling rate F was higher than those in Example 2. As shown in Table 4, when cracking filling and in-mold molding were performed under the conditions of Comparative Example 4, the expanded beads in the mold were excessively compressed, and the expanded beads were hardly fusion-bonded to each other.

Comparative Example 5 is an example in which conventional polypropylene-based resin expanded beads (expanded beads C) were subjected to in-mold molding using a mold similar to that in Example 6. As shown in Table 4, under the molding conditions of Comparative Example 5, the time required for cooling in the mold was increased. In addition, the fusion-bonding rate of the resulting molded article became low.

Although the specific aspects of the method for producing a molded article of thermoplastic resin expanded beads according to the present invention have been described above on the basis of the examples, the specific aspect of the method for producing a molded article of thermoplastic resin expanded beads according to the present invention is as defined in the claims.

**Claims**

1. A method for producing a molded article of thermoplastic resin expanded beads (2), comprising:

   a cracking filling step of filling thermoplastic resin expanded beads (2) having a foamed layer (3) into a molding cavity (12) of a mold (1) with a cracking gap, and then completely closing the mold (1); and
   an in-mold molding step of supplying steam into the molding cavity (12) after completion of the cracking filling step to thereby fusion-bond the expanded beads (2) to each other,
   **characterized in that**
   the expanded beads (2) each have a columnar shape and have at least one of one or two kinds of defective portions (21) selected from the group consisting of a through hole (211) penetrating an inside of the expanded bead (2) in an axial direction thereof and a groove (212) extending along the axial direction on a side peripheral surface of the expanded bead (2),
   in cut surface obtained by cutting the expanded bead (2) at a center in the axial direction along a plane perpendicular to the axial direction, a ratio Ca/A of an average cross-sectional area Ca per one defective portion (21) to an average cross-sectional area A of the expanded bead (2) is 0.01 or more and 0.20 or less, and a ratio Ct/A of a total cross-sectional area Ct of the defective portion(s) (21) to the average cross-sectional area A of the expanded bead (2) is 0.02 or more and 0.20 or less, and

in a state where the mold (1) is completely closed, a filling rate F of the expanded beads (2) represented by Formula (1) below is 125% or more and 220% or less:

$$F = \{a/(b \times c)\} \times 100 \ldots \quad (1)$$

(in Formula (1) above, a represents a mass (unit: kg) of the expanded beads (2) filled in the mold (1), b represents a bulk density (unit: kg/m$^3$) of the expanded beads (2), and c represents a capacity (unit: m$^3$) of the molding cavity (12)).

2. The method for producing a molded article of thermoplastic resin expanded beads (2) according to claim 1, wherein an average length $L_A$ of the molding cavity (12) in an opening/closing direction of the mold (1) is 10 mm or more and 200 mm or less, the average length $L_A$ being represented by Formula (2) below:

$$L_A = V/S \ldots \quad (2)$$

(in Formula (2) above, V represents a capacity (unit: mm$^3$) of the molding cavity (12) in a state where the mold (1) is completely closed, and S represents a projected area (unit: mm$^2$) when the molding cavity (12) is projected in the opening/closing direction of the mold (1)).

3. The method for producing a molded article of thermoplastic resin expanded beads (2) according to claim 1 or 2, wherein a ratio of an apparent density of the expanded beads (2) to the bulk density of the expanded beads is more than 1.6 and less than 2.0.

4. The method for producing a molded article of thermoplastic resin expanded beads (2) according to any one of claims 1 to 3, wherein the expanded beads (2) each have one or more through holes (211) as the defective portion (21).

5. The method for producing a molded article of thermoplastic resin expanded beads (2) according to any one of claims 1 to 4, wherein the expanded beads (2) each include a foamed layer (3) and a fusion-bondability improving layer (4) covering the foamed layer (3), a base resin of the foamed layer (3) is a first thermoplastic resin, and a base resin of the fusion-bondability improving layer (4) is a second thermoplastic resin.

6. The method for producing a molded article of thermoplastic resin expanded beads (2) according to any one of claims 1 to 5, wherein a thermoplastic resin constituting the foamed layer (3) is a polyolefin-based resin.

7. The method for producing a molded article of thermoplastic resin expanded beads (2) according to any one of claims 1 to 6, wherein a thermoplastic resin constituting the foamed layer (3) is an ethylene-propylene random copolymer having an ethylene component amount of 0.5 mass% or more and 3.5 mass% or less.

8. The method for producing a molded article of thermoplastic resin expanded beads (2) according to any one of claims 1 to 7, wherein the bulk density of the expanded beads (2) is 10 kg/m$^3$ or more and 50 kg/m$^3$ or less.

9. The method for producing a molded article of thermoplastic resin expanded beads (2) according to any one of claims 1 to 8, wherein a voidage of the molded article of thermoplastic resin expanded beads (2) obtained by the production method is 4% or more and 12% or less.

10. The method for producing a molded article of thermoplastic resin expanded beads (2) according to any one of claims 1 to 9, wherein the cracking filling step is performed using the expanded beads (2) to which an internal pressure is not applied or the expanded beads (2) to which an internal pressure of less than 0.1 MPa (G) is applied.

11. The method for producing a molded article of thermoplastic resin expanded beads (2) according to any one of claims 1 to 10, wherein in a state where the mold (1) is completely closed, a maximum value $P_{max}$ of a compression rate represented by Formula (3) below is 25% or more and 120% or less:

$$P_{max} = (\delta/L_{min}) \times 100 \ldots \quad (3)$$

(in Formula (3) above, $\delta$ represents a dimension (unit: mm) of the cracking gap of the mold (1), and $L_{min}$ represents a

minimum value (unit: mm) of a length of the molding cavity (12) in an opening/closing direction of the mold (1) in a state where the mold (1) is completely closed).

## Patentansprüche

1. Verfahren zum Produzieren eines geformten Artikels aus expandierten thermoplastischen Harzkügelchen (2), umfassend:

   einen Spaltfüllschritt zum Füllen expandierter thermoplastischer Harzkügelchen (2), die eine geschäumte Schicht (3) aufweisen, in eine Formkavität (12) einer Form (1) mit einer Spaltlücke und anschließenden vollständigen Schließen der Form (1); und
   einen Formschritt zum Zuführen von Dampf in die Formkavität (12) nach Abschluss des Spaltfüllschritts, so dass dadurch die expandierten Kügelchen (2) miteinander verschmolzen werden, **dadurch gekennzeichnet, dass**
   die expandierten Kügelchen (2) jeweils eine säulenartige Form aufweisen und mindestens eine von einer oder zwei Arten von Defektabschnitten (21) aufweisen, die aus der Gruppe bestehend aus einem Durchgangsloch (211), das ein Inneres des expandierten Kügelchens (2) in einer axialen Richtung davon durchdringt, und einer Nut (212), die sich entlang der axialen Richtung auf einer seitlichen Umfangsoberfläche des expandierten Kügelchens (2) erstreckt, ausgewählt werden,
   in einer Schnittfläche, die durch Schneiden des expandierten Kügelchens (2) in einer Mitte in der axialen Richtung entlang einer Ebene senkrecht zu der axialen Richtung erhalten wird, ein Verhältnis Ca/A einer durchschnittlichen Querschnittsfläche Ca pro einem Defektabschnitt (21) zu einer durchschnittlichen Querschnittsfläche A des expandierten Kügelchens (2) 0,01 oder mehr und 0,20 oder weniger beträgt, und ein Verhältnis Ct/A einer gesamten Querschnittsfläche Ct des Defektabschnitts/der Defektabschnitte (21) zu der durchschnittlichen Querschnittsfläche A des expandierten Kügelchens (2) 0,02 oder mehr und 0,20 oder weniger beträgt, und
   in einem Zustand, in dem die Form (1) vollständig geschlossen ist, eine Füllrate F der expandierten Kügelchen (2), die durch Formel (1) unten dargestellt wird, 125% oder mehr und 220% oder weniger beträgt:

$$F = \{a/(b \times c)\} \times 100 \dots \qquad (1)$$

   (in der Formel (1) oben stellt a eine Masse (Einheit: kg) der expandierten Kügelchen (2), die in die Form (1) gefüllt werden, dar, stellt b eine Schüttdichte (Einheit: $kg/m^3$) der expandierten Kügelchen (2) dar, und stellt c eine Kapazität (Einheit: $m^3$) der Formkavität (12) dar).

2. Verfahren zum Produzieren eines geformten Artikels aus expandierten thermoplastischen Harzkügelchen (2) nach Anspruch 1, bei dem eine durchschnittliche Länge $L_A$ der Formkavität (12) in einer Öffnungs-/Schließrichtung der Form (1) 10 mm oder mehr und 200 mm oder weniger beträgt, welche durchschnittliche Länge $L_A$ durch Formel (2) unten dargestellt wird:

$$L_A = V/S \dots \quad (2)$$

   (in der Formel (2) oben stellt V eine Kapazität (Einheit: $mm^3$) der Formkavität (12) in einem Zustand, in dem die Form (1) vollständig geschlossen ist, dar, und stellt S eine projizierte Fläche (Einheit: $mm^2$), wenn die Formkavität (12) in der Öffnungs-/Schließrichtung der Form (1) projiziert wird, dar).

3. Verfahren zum Produzieren eines geformten Artikels aus expandierten thermoplastischen Harzkügelchen (2) nach Anspruch 1 oder 2, bei dem ein Verhältnis einer scheinbaren Dichte der expandierten Kügelchen (2) zu der Schüttdichte der expandierten Kügelchen mehr als 1,6 und weniger als 2,0 beträgt.

4. Verfahren zum Produzieren eines geformten Artikels aus expandierten thermoplastischen Harzkügelchen (2) nach einem der Ansprüche 1 bis 3, bei dem die expandierten Kügelchen (2) jeweils ein oder mehrere Durchgangslöcher (211) als den Defektabschnitt (21) aufweisen.

5. Verfahren zum Produzieren eines geformten Artikels aus expandierten thermoplastischen Harzkügelchen (2) nach einem der Ansprüche 1 bis 4, bei dem die expandierten Kügelchen (2) jeweils eine geschäumte Schicht (3) und eine Verschmelzungsverbesserungsschicht (4), die die geschäumte Schicht (3) bedeckt, aufweisen, ein Basisharz der geschäumten Schicht (3) ein erstes thermoplastisches Harz ist, und ein Basisharz der Verschmelzungsverbesserungsschicht (4) ein zweites thermoplastisches Harz ist.

6. Verfahren zum Produzieren eines geformten Artikels aus expandierten thermoplastischen Harzkügelchen (2) nach einem der Ansprüche 1 bis 5, bei dem ein thermoplastisches Harz, das die geschäumte Schicht (3) darstellt, ein Harz auf Polyolefinbasis ist.

7. Verfahren zum Produzieren eines geformten Artikels aus expandierten thermoplastischen Harzkügelchen (2) nach einem der Ansprüche 1 bis 6, bei dem ein thermoplastisches Harz, das die geschäumte Schicht (3) darstellt, ein statistisches Ethylen-Propylen-Copolymer mit einer Ethylenkomponentenmenge von 0,5 Masse-% oder mehr und 3,5 Masse-% oder weniger ist.

8. Verfahren zum Produzieren eines geformten Artikels aus expandierten thermoplastischen Harzkügelchen (2) nach einem der Ansprüche 1 bis 7, bei dem die Schüttdichte der expandierten Kügelchen (2) 10 kg/m$^3$ oder mehr und 50 kg/m$^3$ oder weniger beträgt.

9. Verfahren zum Produzieren eines geformten Artikels aus expandierten thermoplastischen Harzkügelchen (2) nach einem der Ansprüche 1 bis 8, bei dem ein Leerraum des geformten Artikels aus expandierten thermoplastischen Harzkügelchen (2), der durch das Produktionsverfahren erhalten wird, 4% oder mehr und 12% oder weniger beträgt.

10. Verfahren zum Produzieren eines geformten Artikels aus expandierten thermoplastischen Harzkügelchen (2) nach einem der Ansprüche 1 bis 9, bei dem der Spaltfüllschritt unter Verwendung der expandierten Kügelchen (2), auf die kein interner Druck ausgeübt wird, oder der expandierten Kügelchen (2), auf die ein interner Druck von weniger als 0,1 MPa (G) ausgeübt wird, durchgeführt wird.

11. Verfahren zum Produzieren eines geformten Artikels aus expandierten thermoplastischen Harzkügelchen (2) nach einem der Ansprüche 1 bis 10, bei dem in einem Zustand, in dem die Form (1) vollständig geschlossen ist, ein Maximalwert $P_{max}$ einer Kompressionsrate, die durch Formel (3) unten dargestellt wird, 25% oder mehr und 120% oder weniger beträgt:

$$P_{max} = (\delta/L_{min}) \times 100 \ldots \qquad (3)$$

(in der Formel (3) oben stellt δ eine Abmessung (Einheit: mm) der Spaltlücke der Form (1) dar, und stellt $L_{min}$ einen Minimalwert (Einheit: mm) einer Länge der Formkavität (12) in einer Öffnungs-/Schließrichtung der Form (1) in einem Zustand, in dem die Form (1) vollständig geschlossen ist, dar).

## Revendications

1. Procédé de production d'un article moulé à partir de billes expansées en résine thermoplastique (2), comprenant :

une étape de colmatage de fissures consistant à remplir une cavité de moulage (12) d'un moule (1) avec un espace de fissuration à l'aide de billes expansées en résine thermoplastique (2) ayant une couche de mousse (3), puis à fermer complètement le moule (1) ; et
une étape de moulage en moule consistant à fournir de la vapeur dans la cavité de moulage (12) après l'achèvement de l'étape de colmatage de fissures, afin de lier par fusion les billes expansées (2) les unes aux autres,
**caractérisé en ce que** les billes expansées (2) ont chacune une forme colonnaire et ont au moins l'une des deux types de parties défectueuses (21) choisies parmi le groupe constitué d'un trou traversant (211) pénétrant à l'intérieur de la bille expansée (2) dans la direction axiale de celle-ci et d'une rainure (212) s'étendant le long de la direction axiale sur une surface périphérique latérale de la bille expansée (2),
dans une surface de coupe obtenue en coupant la bille expansée (2) en son centre dans la direction axiale le long d'un plan perpendiculaire à la direction axiale, un rapport Ca/A entre une section transversale moyenne Ca par partie défectueuse (21) et une section transversale moyenne A de la bille expansée (2) est compris entre 0,01 et 0,20, et le rapport Ct/A entre la section transversale totale Ct de la ou des parties défectueuses (21) et la section transversale moyenne A de la bille expansée (2) est de 0,02 ou plus et de 0,20 ou moins, et
dans un état où le moule (1) est complètement fermé, un taux de remplissage F des billes expansées (2) représenté par la formule (1) ci-dessous est de 125 % ou plus et de 220 % ou moins :

$$F = \{a/(b \times c)\} \times 100 ... \qquad (1)$$

(Dans la formule (1) ci-dessus, a représente la masse (unité : kg) des billes expansées (2) remplies dans le moule (1), b représente la densité volumique (unité : $kg/m^3$) des billes expansées (2) et c représente la capacité (unité : $m^3$) de la cavité de moulage (12)).

2. Procédé de production d'un article moulé à partir de billes expansées (2) en résine thermoplastique selon la revendication 1, dans lequel la longueur moyenne $L_A$ de la cavité de moulage (12) dans la direction d'ouverture/-fermeture du moule (1) est de 10 mm ou plus et de 200 mm ou moins, la longueur moyenne $L_A$ étant représentée par la formule (2) ci-dessous :

$$L_A = V/S ... \quad (2)$$

(dans la formule (2) ci-dessus, V représente la capacité (unité : $mm^3$) de la cavité de moulage (12) dans un état où le moule (1) est complètement fermé, et S représente la surface projetée (unité : $mm^2$) lorsque la cavité de moulage (12) est projetée dans la direction d'ouverture/fermeture du moule (1)).

3. Procédé de production d'un article moulé à partir de billes expansées en résine thermoplastique (2) selon la revendication 1 ou 2, dans lequel le rapport entre la densité apparente des billes expansées (2) et la densité volumique des billes expansées est supérieur à 1,6 et inférieur à 2,0.

4. Procédé de production d'un article moulé à partir de billes expansées (2) en résine thermoplastique selon l'une quelconque des revendications 1 à 3, dans lequel les billes expansées (2) ont chacune un ou plusieurs trous traversants (211) en tant que partie défectueuse (21).

5. Procédé de production d'un article moulé à partir de billes expansées (2) en résine thermoplastique selon l'une quelconque des revendications 1 à 4, dans lequel les billes expansées (2) comprennent chacune une couche de mousse (3) et une couche (4) améliorant l'aptitude à la liaison par fusion recouvrant la couche de mousse (3), la résine de base de la couche de mousse (3) est une première résine thermoplastique, et la résine de base de la couche améliorant l'aptitude au soudage par fusion (4) est une deuxième résine thermoplastique.

6. Procédé de production d'un article moulé à partir de billes expansées en résine thermoplastique (2) selon l'une quelconque des revendications 1 à 5, dans lequel une résine thermoplastique constituant la couche de mousse (3) est une résine à base de polyoléfine.

7. Procédé de production d'un article moulé à partir de billes expansées en résine thermoplastique (2) selon l'une quelconque des revendications 1 à 6, dans lequel la résine thermoplastique constituant la couche de mousse (3) est un copolymère statistique d'éthylène-propylène ayant une teneur en composant éthylène de 0,5 % en masse ou plus et de 3,5 % en masse ou moins.

8. Procédé de production d'un article moulé à partir de billes expansées en résine thermoplastique (2) selon l'une quelconque des revendications 1 à 7, dans lequel la densité volumique des billes expansées (2) est de 10 $kg/m^3$ ou plus et de 50 $kg/m^3$ ou moins.

9. Procédé de production d'un article moulé à partir de billes expansées de résine thermoplastique (2) selon l'une quelconque des revendications 1 à 8, dans lequel le taux de vides de l'article moulé à partir de billes expansées de résine thermoplastique (2) obtenu par le procédé de production est de 4 % ou plus et de 12 % ou moins.

10. Procédé de production d'un article moulé à partir de billes expansées de résine thermoplastique (2) selon l'une quelconque des revendications 1 à 9, dans lequel l'étape de colmatage de fissures est réalisée en utilisant les billes expansées (2) auxquelles aucune pression interne n'est appliquée ou les billes expansées (2) auxquelles une pression interne inférieure à 0,1 MPa (G) est appliquée.

11. Procédé de production d'un article moulé à partir de billes expansées (2) en résine thermoplastique selon l'une quelconque des revendications 1 à 10, dans lequel, dans un état où le moule (1) est complètement fermé, une valeur

maximale $P_{max}$ du taux de compression représenté par la formule (3) ci-dessous est de 25 % ou plus et de 120 % ou moins :

$$P_{max} = (\delta/L_{min}) \times 100 \ldots \quad (3)$$

(dans la formule (3) ci-dessus, $\delta$ représente une dimension (unité : mm) de l'espace de fissuration du moule (1), et $L_{min}$ représente une valeur minimale (unité : mm) d'une longueur de la cavité de moulage (12) dans une direction d'ouverture/fermeture du moule (1) dans un état où le moule (1) est complètement fermé).

FIG. 1

FIG. 2

3
(21)
211
2

III          III

FIG. 3

2

3

Q3          r          Q4

C          211

FIG. 4

FIG. 5

FIG. 6

FIG. 7

EP 4 461 501 B1

FIG. 8

41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020189389 A
- US 2021300005 A1
- EP 4321565 A1
- EP 4406997 A1
- JP 2003201361 A

### Non-patent literature cited in the description

- Propylene/ethylene copolymer. Polymer Analysis Handbook. Kinokuniya Company Ltd., January 1995, 615-616
- Propylene/butene copolymer. Polymer Analysis Handbook. Kinokuniya Company Ltd., 618-619